(19) Europäisches Patentamt
European Patent Office
Office européen des brevets

(11) **EP 3 985 461 B1**

(12) **EUROPEAN PATENT SPECIFICATION**

(45) Date of publication and mention
of the grant of the patent:
**19.03.2025 Bulletin 2025/12**

(21) Application number: **21201896.4**

(22) Date of filing: **11.10.2021**

(51) International Patent Classification (IPC):
**G05B 17/02** $^{(2006.01)}$     **G05B 13/02** $^{(2006.01)}$

(52) Cooperative Patent Classification (CPC):
**G05B 13/0265; G05B 17/02**

(54) **MODEL LEARNING APPARATUS, CONTROL APPARATUS, MODEL LEARNING METHOD AND COMPUTER PROGRAM**

MODELLLERNVORRICHTUNG, STEUERUNGSVORRICHTUNG, MODELLLERNVERFAHREN UND COMPUTERPROGRAMM

APPAREIL D'APPRENTISSAGE DE MODÈLE, APPAREIL DE COMMANDE, PROCÉDÉ D'APPRENTISSAGE DE MODÈLE ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2020 JP 2020173380**

(43) Date of publication of application:
**20.04.2022 Bulletin 2022/16**

(73) Proprietors:
- **Kabushiki Kaisha Toyota Chuo Kenkyusho**
  **Nagakute-shi, Aichi 480-1192 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**
- **Kabushiki Kaisha Toyota Jidoshokki**
  **Kariya-shi, Aichi 448-8671 (JP)**
  Designated Contracting States:
  **AL BE BG CH CY CZ DE DK EE ES FI FR GB GR HR HU IE IS IT LI LT LU LV MC MK MT NL NO PL PT RO RS SE SI SK SM TR**

(72) Inventors:
- **MORIYASU, Ryuta**
  **Nagakute-shi, 480-1192 (JP)**
- **IKEDA, Taro**
  **Nagakute-shi, 480-1192 (JP)**
- **TAKEUCHI, Masato**
  **Kariya-shi, 448-8671 (JP)**

(74) Representative: **Kramer Barske Schmidtchen Patentanwälte PartG mbB**
**European Patent Attorneys**
**Landsberger Strasse 300**
**80687 München (DE)**

(56) References cited:
**WO-A1-98/18063**

- **BARATCHART LAURENT ET AL: "Wiener-Hammerstein systems and harmonic identification", 2015 IEEE INTERNATIONAL INSTRUMENTATION AND MEASUREMENT TECHNOLOGY CONFERENCE (I2MTC) PROCEEDINGS, IEEE, 11 May 2015 (2015-05-11), pages 612 - 617, XP033171107, DOI: 10.1109/ I2MTC.2015.7151338**
- **RYUTA MORIYASU ET AL: "Structured Hammerstein-Wiener Model Learning for Model Predictive Control", ARXIV.ORG, CORNELL UNIVERSITY LIBRARY, 201 OLIN LIBRARY CORNELL UNIVERSITY ITHACA, NY 14853, 9 July 2021 (2021-07-09), XP091010055, DOI: 10.1109/LCSYS.2021.3077201**

**Description**

Cross-Reference to related Applications

The present application claims priority to Japanese Patent Application No. 2020-173380 filed on October 14, 2020.

Technical Field

The present disclosure relates to a model learning apparatus, a control apparatus, a model learning method, and a computer program.

Background

A model learning apparatus has conventionally been known to learn a model showing a relationship between an input for controlling a system and an output from the system in response to this input.

For example, Japanese Patent Application No.2018-179888 (JP 2020-51305A) describes a model learning apparatus configured to learn a model, which is used for model predictive control that predicts and controls a future state of a system, by machine learning. Non-Patent Literature "Optimal Control Via Neural Networks: A Convex Approach" (Yize Chen, Yuanyuan Shi, Baosen Zhang URL: https://arxiv.org/abs/1805.11835) describes a technique of maximizing the output of a system by model predictive control using a special model.

Summary

Technical Problem

The proposed techniques described above, however, still have some room for improvement with respect to the technique involved in the model learning apparatus to learn a model that is capable of establishing a control apparatus configured to determine an input that improves the followability of an output to a target value, while stably controlling the system. Model predictive control using a model solves some type of an optimization problem called an optimal control problem (OCP) at every control period of the system. This optimal control problem takes advantage of prediction of a future state of a system and a change in output of the system by using a model and determines an optimum time series of input to provide a most desired behavior with regard to the state of the system and the change in output. More specifically, the model predictive control solves an optimization (minimization) problem to determine a time series of input that minimizes an objective function arbitrarily set by a designer.

In the technique described in Patent Literature 1, the model learnt by machine learning has a relatively high non-linearity. An optimal control problem is thus likely to become a nonconvex optimization problem. This is unlikely to guarantee the uniqueness of a solution and is also likely to cause an irregular fluctuation of an input, depending on a set initial condition. It is accordingly difficult to assure the reliability. The technique of Non-Patent Literature 1 establishes a control apparatus by using a special model to determine an input that maximizes or minimizes a certain output or a state itself. It is, however, difficult to determine a unique input that minimizes a deviation of output in the case where an output is controlled to follow a given target value of the output. The control of making the output follow the target value of the output is thus likely to become unstable.

In order to solve the problems described above, with respect to a model learning apparatus configured to learn a model showing a relationship between an input and an output in a system, an object of the present disclosure is to provide a technique of learning a model to determine an input that improves the followability of an output to a target value, while stably controlling the system.

Solution to Problem

The present disclosure may be implemented by aspects described below to solve the problems described above.
(1) According to one aspect of the present disclosure, there is provided a model learning apparatus configured to learn a model that shows a relationship between an input variable v input into a system and an output variable y output from the system. This model learning apparatus comprises a model storage portion configured to store a model used to learn a nonlinear equation of state for predicting the output variable y by using the input variable v; and a learning portion configured to learn the equation of state by using the model and an input-output data set including multiple sets of input variable data and output variable data with respect to the model. The model is an equation of state including a bijective mapping ψ that uses the input variable v as an input thereof and a bijective mapping ϕ that uses the output variable y as an input thereof.

In the model learning apparatus of this aspect, the model is the equation of state including the bijective mapping ψ that uses the input variable v input into the system as the input thereof and the bijective mapping ϕ that uses the output variable y output from the system as the input thereof. This equation of state is linearized by using the respective mappings ψ and ϕ as internal variables. This configuration thus guarantees that even a control problem using a model having a nonlinear structure gives a unique solution. This allows for determination of just one optimum value of the input variable v input into the system. In the case where this model learning apparatus is applied to a control apparatus configured to control a system, the control apparatus uses the optimum value of the input variable v to improve the followability of an output from the system to a target value, while stably controlling the system. Accordingly, the model learning apparatus of this configuration learns a model that is capable of establishing a control apparatus configured to determine an input that improves the followability of an output to a target value, while stably controlling the system.

(2) In the model learning apparatus of the above aspect, the model may be defined by an expression (1):
[Math. 16]

$$\dot{y} = \left(\frac{\partial \Phi}{\partial y}\right)^{-1} \left\{ A'(\mathrm{d})\Phi(y,\mathrm{d}) + B'(\mathrm{d})\Psi(v,\mathrm{d}) + c'(\mathrm{d}) - \frac{\partial \Phi}{\partial \mathrm{d}}\dot{\mathrm{d}} \right\} \qquad (1)$$

where a left side of an equal sign is a time derivative of an n-dimensional vector that indicates the output variable y, where n denotes an integer number; and in a right side of the equal sign, the input variable v is an m-dimensional vector, where m denotes an integer number, an exogenous input d is a p-dimensional vector that indicates an uncontrollable input affecting a variation of the output variable y, where p denotes an integer number, the mapping ψ is a function that gives an m-dimensional vector by using the input variable v and the exogenous variable d as inputs thereof, the mapping ϕ is a function that gives an n-dimensional vector by using the output variable y and the exogenous variable d as inputs thereof, and a function A', a function B' and a function c' are respectively functions that give an n×n matrix, an n×m matrix, and an n-dimensional vector by using the exogenous input d as an input thereof. In the model learning apparatus of this aspect, the mappings ψ and ϕ are respectively the bijective mappings using the input variable v and the output variable y as their inputs, so that the expression (1) is formally rewritten, like $F^{-1}$= ψ and $G^{-1}$= ϕ by using, for example, functions F and G. The exogenous input d that is the uncontrollable input affecting a variation of the output variable y is included in each of the mappings ψ and ϕ included in the model of the expression (1). Furthermore, in the model of the expression (1), a function A'(d) and a function B'(d) that use the exogenous input d as inputs thereof respectively work as coefficients of the mappings ψ and ϕ. Additionally, the model of the expression (1) includes a function c'(d) that uses the exogenous input d as an input thereof and a time derivative term of the exogenous input d. This causes the model of the expression (1) to be an equation of state that takes into account the influence of the uncontrollable exogenous input d affecting a variation of the output variable y. Using this model thus enables a future state of the system to be predicted with high accuracy. Accordingly, the model learning apparatus of this configuration learns a model that controls the system with high accuracy.

(3) In the model learning apparatus of the above aspect, in the expression (1), when the mapping ψ is defined as an internal variable u and the mapping ϕ is defined as an internal variable x, the learning portion may learn the equation of state defined by an expression (2) to an expression (4):
[Math. 17]

$$u = \Psi(v,\mathrm{d}) \qquad (2);$$

[Math. 18]

$$y = \Phi^{-1}(x,d) \qquad (3);$$

and
[Math. 19]

$$\dot{x} = A'(\mathrm{d})x + B'(\mathrm{d})u + c'(\mathrm{d}) \qquad (4).$$

In the model learning apparatus of this aspect, the equation of state of the expression (1) is linearized by defining the mapping ψ and the mapping ϕ in the equation of state of the expression (1) respectively as the internal variable u and as the internal variable x. This configuration guarantees that an optimal control problem using the equation of state shown by the expression (1) gives a unique solution. Accordingly, the model learning apparatus of this configuration learns a model that is capable of establishing a control apparatus configured to determine an input that improves the followability of an output to a target value, while stably controlling the system.

(4) In the model learning apparatus of the above aspect, the mapping $\psi$ may be defined by an expression (5) to an expression (8):

[Math. 20]

$$\Psi(v, d) = v_{\Psi}^{(L_{\Psi})} \tag{5};$$

[Math. 21]

$$v_{\Psi}^{(i)} = \phi_{\Psi}^{(i)}\left(u_{\Psi}^{(i)}, d\right) \tag{6};$$

[Math. 22]

$$u_{\Psi}^{(i)} = W_{\Psi}^{(i)}(d)v_{\Psi}^{(i-1)} + b_{\Psi}^{(i)}(d) \tag{7};$$

and
[Math. 23]

$$v_{\Psi}^{(0)} = v \tag{8},$$

and the mapping $\phi$ may be defined by an expression (9) to an expression (12):
[Math. 24]

$$\Phi(y, d) = y_{\Phi}^{(L_{\Phi})} \tag{9};$$

[Math. 25]

$$y_{\Phi}^{(i)} = \varphi_{\Phi}^{(i)}\left(x_{\Phi}^{(i)}, d\right) \tag{10};$$

[Math. 26]

$$x_{\Phi}^{(i)} = W_{\Phi}^{(i)}(d)y_{\Phi}^{(i-1)} + b_{\Phi}^{(i)}(d) \tag{11};$$

and
[Math. 27]

$$y_{\Phi}^{(0)} = y \tag{12},$$

In the expression (5) to the expression (12), i denotes a layer number in a multilayer neural network; each of $L_{\psi}$ and $L_{\phi}$ denotes number of layers in the multilayer neural network; each of $W_{\psi}$ and $W_{\phi}$ denotes a weight, each of $b_{\psi}$ and $b_{\phi}$ denotes a bias; and each of $\psi_{\psi}$ and $\phi_{\phi}$ is an activation function and denotes an arbitrary bijective mapping that gives an output of an identical dimension with a dimension of an input thereof. In the model learning apparatus of this aspect, each of the mappings $\psi$ and $\phi$ is defined by using a multilayer neural network. This configuration enables a model that predicts an actual output of the system with high accuracy to be learnt by adjusting the weights $W_{\psi}$ and $W_{\phi}$ and the biases $b_{\psi}$ and $b_{\phi}$ in each layer of the multilayer neural network such as to cause the output variable y corresponding to the input variable v calculated by using the model to approach an actual output of the system. Accordingly, the model learning apparatus of this configuration learns a model that is capable of establishing a control apparatus configured to determine an input that further improves the followability of an output to a target value.

(5) In the model learning apparatus of the above aspect, the learning portion may be configured to: give a set of the input variable data in the input-output data set to the model and estimate an output; evaluate a matching degree of the estimated output with a set of the output variable data in the input-output data set; and update a learning parameter of the model according to a result of the evaluation, so as to learn the equation of state. In the model learning apparatus of this aspect, the learning portion evaluates the matching degree of the output estimated by using the input variable dataset in the input-output data set, with the output variable data set. The learning portion updates the learning parameter with respect to the model according to this evaluation of the matching degree to learn the equation of state. The learning portion can thus learn a nonlinear equation of state according to a learning procedure using input-output data set provided in advance as teaching data. This enables the model to be learnt in accordance with an actual system. Accordingly, this configuration learns a model that is capable of establishing a control apparatus configured to furthermore improve the followability of an output from the system to a target value, while furthermore stably controlling the system.

(6) In the model learning apparatus of the above aspect, the learning portion may learn an equation of state expressed by an expression (13) to an expression (15) obtained by discretizing the equation (2) to the equation (4) by a time step at a discrete time k:

[Math. 28]

$$u_k = \Psi(v_k, d_k) \tag{13};$$

[Math. 29]

$$y_k = \Phi^{-1}(x_k, d_k) \tag{14};$$

and

[Math. 30]

$$x_{k+1} = A(d_k)x_k + B(d_k)u_k + c(d_k) \tag{15}.$$

In the model learning apparatus of this aspect, the learning portion learns the equation of state expressed by the expression (13) to the expression (15) obtained by discretizing the equation of state expressed by the expression (2) to the expression (4) by the time step at the discrete time k. This configuration limits the numbers of the internal variables x and u and thereby shortens a time period required for learning the model. Accordingly, this configuration learns, in a relatively short time, a model that is capable of establishing a control apparatus configured to determine an input that improves the followability of an output to a target value, while stably controlling the system.

(7) According to another aspect of the present disclosure, there is provided a control apparatus configured to control a system. This control apparatus comprises the model learning apparatus described in the above aspect (6); and a determination portion configured to determine a target value of the input variable v corresponding to a target value of the output variable y by using the equation of state learnt by the learning portion. The determination portion solves an optimal control problem using the equation of state expressed by the expression (13) to the expression (15) and learnt by the learning portion. In the control apparatus of this aspect, the determination portion uses the equation of state expressed by the expression (13) to the expression (15) and learnt by the learning portion to solve the optimal control problem and thereby determine the target value of the input variable v. By taking advantage of that the equation (15) is a linear model, the optimal control problem using the expression (13) to the expression (15) can be regarded as a convex optimization problem. This configuration allows for determination of just one optimum value of the input variable v input into the system. The control apparatus accordingly improves the followability of an output from the system to a target value, while stably controlling the system.

(8) According to another aspect of the present disclosure, there is provided a model learning method of learning a model that shows a relationship between an input variable v input into a system and an output variable y output from the system. This model learning method comprises a process of obtaining a model used to learn a nonlinear equation of state for predicting the output variable y by using the input variable v; and a process of learning the equation of state by using the model and an input-output data set including multiple sets of input variable data and output variable data with respect to the model. The model is an equation of state including a bijective mapping ψ that uses the input variable v as an input thereof and a bijective mapping φ that uses the output variable y as an input thereof. In the model learning method of this aspect, the model obtained by the model obtaining process is the equation of state including the bijective mapping ψ that uses the input variable v input into the system as the input thereof and the bijective mapping φ that uses the output variable output from the system as the input thereof. This equation of state is linearized by using the respective mappings ψ and φ as internal variables. This configuration thus guarantees that even a control problem using a model having a nonlinear structure gives a unique solution. This allows for determination of just one optimum value of the input variable v input into the system. In the case where this model learning method is applied to a control apparatus configured to control a system, the control apparatus uses the optimum value of the input variable v to improve the followability of an output from the system to a target value, while stably controlling the system. Accordingly, the model learning method of this configuration learns a model that is capable of establishing a control apparatus configured to determine an input that improves the followability of an output to a target value, while stably controlling the system.

(9) According to another aspect of the present disclosure, there is provided a computer program that causes an information processing apparatus to perform leaning of a model that shows a relationship between an input variable v input into a system and an output variable y output from the system. This computer program causes the information processing apparatus to perform: a function of obtaining a model used to learn a nonlinear equation of state for predicting the output variable y by using the input variable v; and a function of learning the equation of state by using the model and an input-output data set including multiple sets of input variable data and output variable data with respect to the model. The model is an equation of state including a bijective mapping $\psi$ that uses the input variable v as an input thereof and a bijective mapping $\phi$ that uses the output variable y as an input thereof. In the computer program of this aspect, the model obtained by the model obtaining function is the equation of state including the bijective mapping $\psi$ that uses the input variable v input into the system as the input thereof and the bijective mapping $\phi$ that uses the output variable output from the system as the input thereof. This equation of state is linearized by using the respective mappings $\psi$ and $\phi$ as internal variables. This configuration thus guarantees that even a control problem using a model having a nonlinear structure gives a unique solution. This allows for determination of just one optimum value of the input variable v input into the system. In the case where this computer program is applied to the information processing apparatus of a control apparatus configured to control a system, the control apparatus uses the optimum value of the input variable v to improve the followability of an output from the system to a target value, while stably controlling the system. Accordingly, the information processing apparatus learns a model that is capable of establishing a control apparatus configured to determine an input that improves the followability of an output to a target value, while stably controlling the system.

The present disclosure may be implemented by a variety of aspects: for example, an apparatus and a method of learning a model of a nonlinear system; an apparatus and a method of estimating a state by using a model obtained by learning; a system including these apparatuses; a computer program executed in these apparatuses and the system; a server apparatus configured to deliver the computer program; and a non-transitory storage medium configured to store the computer program therein.

Brief Description of Drawings

Fig. 1 is a schematic diagram illustrating the configuration of a model learning apparatus according to a first embodiment;
Fig. 2 is a flowchart showing a model learning method according to the first embodiment;
Fig. 3 is a schematic diagram illustrating the configuration of a control apparatus according to a second embodiment;
Fig. 4 is a flowchart showing a predictive control method according to the second embodiment;
Fig. 5 is a schematic diagram illustrating one example of a convex function and a nonconvex function;
Fig. 6 is a first schematic diagram illustrating results of calculation in the model learning apparatus; and
Fig. 7 is a second schematic diagram illustrating results of calculation in two model learning apparatuses.

Description of Embodiments

<First Embodiment>

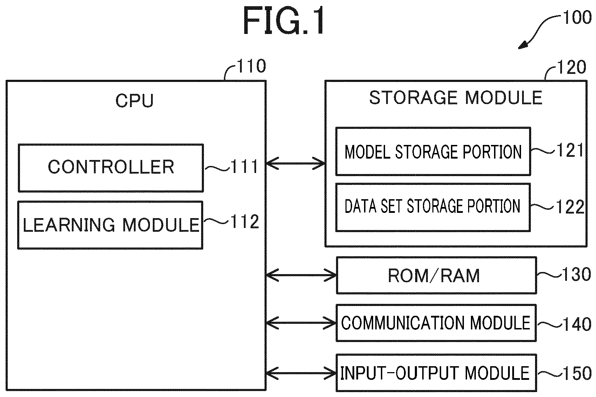

Fig. 1 is a schematic diagram illustrating the configuration of a model learning apparatus 100 according to a first embodiment. The model learning apparatus 100 of this embodiment is an apparatus configured to learn a model of a nonlinear system. The "nonlinear system" herein means a system having such a characteristic that a relationship between an input parameter and an output parameter with respect to an arbitrary control object (system) is not expressed by or is not approximated by a linear expression. According to this embodiment, a nonlinear equation of state is illustrated as the "model". More specifically, the model learning apparatus 100 learns a nonlinear equation of state that predicts an output variable y of an arbitrary system as a result of control with an input variable v input into the system by regarding a state of the system as the output variable y output from the system. The "equation of state" means an equation that determines an output variable thereof y.(t) by using an output variable y(t) at a present time t, like "y.(t)= f(y(t),...)". Hereinafter, as a matter of convenience of notation, a time derivative of an arbitrary variable z is expressed as "z·".

The system includes, for example, an internal combustion engine, a hybrid engine, a power train or the like. When the system is a driving engine such as an internal combustion engine, a hybrid engine, or a power train, the model to be learnt by the model learning apparatus 100 is a nonlinear equation of state that indicates a relationship of a variety of parameters relating to driving of the system, for example, an operation amount of an actuator of a control object, a disturbance to the control object, a state of the control object, an output of the control object, and an output target value of the control object. When an internal combustion engine mounted on a vehicle is assumed as the system of the embodiment, the model learning apparatus learns the equation of state for predicting an output value of the internal combustion engine, an emission amount of carbon dioxide, and an emission amount of hydrocarbons, which are output from the internal combustion engine, as the output variable y, in response to input of an accelerator position, a speed of the vehicle and an acceleration of the vehicle as the input variable v. When a hybrid engine comprised of an internal combustion engine and a motor mounted on a vehicle is assumed as the system of the embodiment, the model learning apparatus learns the equation of state for predicting an output value of the internal combustion engine, an output value of the motor, a power storage amount of a battery, and a limiting value of the power storage amount, which are output from the hybrid engine, as the output variable y, in response to input of an accelerator position, an operation amount of a brake and an acceleration of the vehicle as the input variable. In these cases, the running condition of the vehicle that varies in the course of a run (for example, whether the vehicle is turning or not or whether the vehicle is going up an uphill road) is the "initial condition" described in the paragraph [0068].

The model learning apparatus 100 is configured by, for example, a personal computer (PC) and includes a CPU 110, a storage module 120, a ROM/ RAM 130, a communication module 140, and an input-output module 150. The respective components of the model learning apparatus 100 are connected with each other by means of buses.

The CPU 110 includes a controller 111 and a learning module 112. The controller 111 loads a computer program stored in the ROM 130 and expands and executes the computer program on the RAM 130 to control the respective components of the model learning apparatus 100. The learning module 112 functions to learn a nonlinear equation of state for predicting an output variable y that indicates a state of an arbitrary system (nonlinear system). The details of the functions of the learning module 112 will be described later.

The storage module 120 is a storage medium configured by a hard disk, a flash memory, a memory card or the like. The storage module 120 includes a model storage portion 121 and a data set storage portion 122. The model storage portion 121 stores in advance a model that is used to learn the equation of state by the learning module 112. According to the embodiment, the model stored in the model storage portion 121 is an equation of state including a bijective mapping $\psi$ that uses an input variable v as an input thereof and a bijective mapping $\phi$ that uses the output variable y as an input thereof and is defined by Expression (1) given below. The term "bijective" herein means a state that, when the result of mapping of a set A is a set B, respective elements of the set A and respective elements of the set B necessarily have a one-to-one mapping relationship. This is synchronous with, for example, a state that a bijective function f assures the presence of a unique inverse function $f^{-1}$.

[Math. 31]

$$\dot{y} = \left(\frac{\partial \Phi}{\partial y}\right)^{-1} \left\{ A'(d)\Phi(y, d) + B'(d)\Psi(v, d) + c'(d) - \frac{\partial \Phi}{\partial d}\dot{d} \right\} \tag{1}$$

In the above expression, a left side of an equal sign is a time derivative of an n-dimensional vector (where n denotes an integer number) that indicates the output variable y. In a right side of the equal sign, the input variable v is an m-dimensional vector (where m denotes an integer number), and an exogenous input d is a p-dimensional vector (where p denotes an integer number) that indicates an uncontrollable input affecting a variation of the output variable y. In the right side of the equal sign, the mapping $\psi$ is a function that gives an m-dimensional vector by using the input variable v and the exogenous variable d as inputs thereof; the mapping $\phi$ is a function that gives an n-dimensional vector by using the output variable y and the exogenous variable d as inputs thereof; and a function A', a function B' and a function c' are respectively functions that give an n×n matrix, an n×m matrix, and an n-dimensional vector by using the exogenous input d as an input thereof.

The data set storage portion 122 stores in advance an input-output data set including multiple sets of input variable data and output variable data with respect to the model expressed by Expression (1). These sets of the input variable data and the output variable data are determined in advance by experiment or calculation with respect to the system. The input-output data set is used as teaching data, which is employed to learn the equation of state by the learning module 112. In the description below, in the input-output data set, a plurality of input variable data may collectively be referred to as "input variable data set", and a plurality of output variable data may collectively be referred to as "output variable data set".

The communication module 140 controls communication via a communication interface between the model learning apparatus 100 and another apparatus. Another apparatus is, for example, a control apparatus configured to control the system, another information processing apparatus, or a measuring instrument configured to obtain the input-output data set from the data set storage portion 122. The input-output module 150 serves as various interfaces used for input and output of information between the model learning apparatus 100 and users. Examples of the input-output module 150 include a touch panel, a keyboard, a mouse, an operation button, and a microphone as an input portion and a touch panel, a monitor, a speaker, and an LED (light emitting diode) indicator as an output portion.

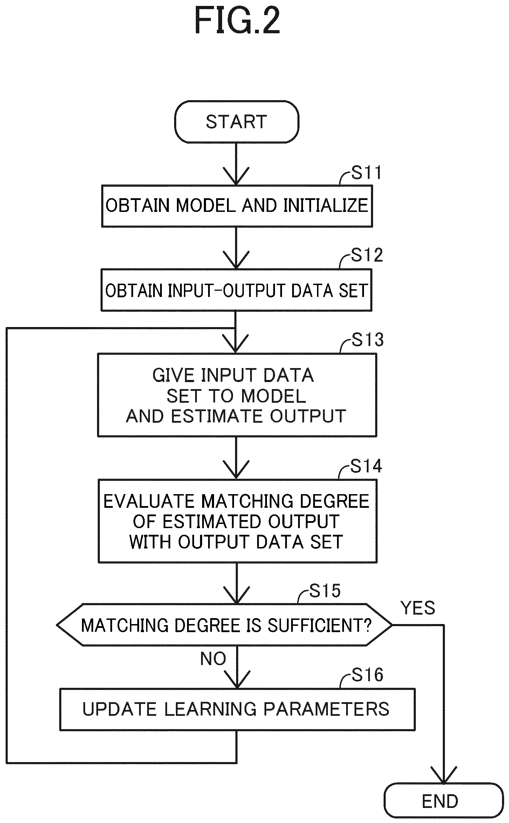

Fig. 2 is a flowchart showing a model learning method according to the first embodiment. The model learning method in the model learning apparatus 100 is performed, for example, in response to a user's request, such as activation of a predetermined application. According to the embodiment, the model learning method learns (estimates) a function form of a function F expressed by Expression (16) given below by using a known input-output data set including an output variable y, an input variable v, an exogenous input d in a system, a time derivative y· of the output variable y, and a time derivative d· of the exogenous input d in the equation of state shown by Expression (1). In this embodiment, the output variable y is an n-dimensional vector, the input variable v is an m-dimensional vector, and the exogenous input d is a p-dimensional vector.

[Math. 32]

$$\dot{y}(t) = F(y, v, d, \dot{d}) \tag{16}$$

The learning module 112 first obtains a model that is stored in the model storage portion 121 (step S11). More specifically, the learning module 112 assumes a model for learning the function F as the equation of state expressed by Expression (1) given below. The learning module 112 sets each of the values of the respective variables to zero or a random value in the equation of state expressed by Expression (1), so as to initialize the respective variables:

[Math. 33]

$$\dot{y} = \left(\frac{\partial \Phi}{\partial y}\right)^{-1} \left\{ A'(d)\Phi(y,d) + B'(d)\Psi(v,d) + c'(d) - \frac{\partial \Phi}{\partial d}\dot{d} \right\} \tag{1}$$

According to the embodiment, the learning module 112 defines the mapping ψ included in Expression (1) as an internal variable u expressed by Expression (2) given below and defines the mapping φ included in Expression (1) as an internal variable x expressed by Expression (3) given below. The learning module 112 accordingly learns an equation of state expressed by Expression (4) given below and obtained by rewriting Expression (1) by using the internal variables u and x. The advantageous effects of respectively defining the respective mappings φ and ψ included in the equation of state in Expression (1) as the internal variables x and u will be described later.

[Math. 34]

$$u = \Psi(v, d) \tag{2}$$

[Math. 35]

$$y = \Phi^{-1}(x, d) \tag{3}$$

[Math. 36]

$$\dot{x} = A'(d)x + B'(d)u + c'(d) \tag{4}$$

Furthermore, according to the embodiment, the learning module 112 employs the concept of a multilayer neural network to define Expression (5) to Expression (8) given below with respect to the mapping ψ:

[Math. 37]

$$\Psi(v, d) = v_\Psi^{(L_\Psi)} \tag{5}$$

[Math. 38]

$$v_\Psi^{(i)} = \phi_\Psi^{(i)}\left(u_\Psi^{(i)}, d\right) \tag{6}$$

[Math. 39]

$$u_\Psi^{(i)} = W_\Psi^{(i)}(d)v_\Psi^{(i-1)} + b_\Psi^{(i)}(d) \tag{7}$$

[Math. 40]

$$v_\Psi^{(0)} = v \tag{8}$$

According to the embodiment, like Expression (5) to Expression (8) with respect to the mapping ψ, the learning module 112 also employs the concept of the multilayer neural network to define Expression (9) to Expression (12) given below with respect to the mapping ϕ:

[Math. 41]

$$\Phi(y, d) = y_\Phi^{(L_\Phi)} \tag{9}$$

[Math. 42]

$$y_\Phi^{(i)} = \varphi_\Phi^{(i)}\left(x_\Phi^{(i)}, d\right) \tag{10}$$

[Math. 43]

$$x_\Phi^{(i)} = W_\Phi^{(i)}(d)y_\Phi^{(i-1)} + b_\Phi^{(i)}(d) \tag{11}$$

[Math. 44]

$$y_\Phi^{(0)} = y \tag{12}$$

where i denotes a layer number in the multilayer neural network; each of $L_\psi$ and $L_\phi$ denotes the number of layers in the multilayer neural network; each of $W_\psi$ and $W_\phi$ denotes a weight, each of $b_\psi$ and $b_\phi$ denotes a bias; and each of $\psi_\psi$ and $\phi_\phi$ is an activation function and denotes an arbitrary bijective mapping that gives an output of an identical dimension with the dimension of an input thereof. Each of the weights $W_\psi$ and $W_\phi$, the biases $b_\psi$ and $b_\phi$, and the activation functions $\psi_\psi$ and $\phi_\phi$ may be set for each layer of the multilayer neural network.

The learning module 112 subsequently obtains an input-output data set [y, v, d, y· and d·] with respect to the output variable y, the input variable v, the exogenous input d, the time derivative y· of the output variable y and the time derivative d· of the exogenous input d from the data set storage portion 122 (step S12). According to the embodiment, the input-output data set [y, v, d, y· and d·] includes j sets of the respective data (where j denotes a natural number and j= 1 to N). In the obtained input-output data set [$y_j$, $v_j$, $d_j$, d·$_j$] corresponds to the input variable data set, and [y·$_j$] corresponds to the output variable data set.

The learning module 112 subsequently gives an input data set to the model and estimates an output (step S13). More specifically, the learning module 112 gives the input variable dataset [$y_j$, $v_j$, $d_j$, d·$_j$] obtained at step S12 to the equation of state of Expression (1) obtained and initialized at step S11. The learning module 112 accordingly obtains an estimated value of an output variable y·$_j$ (a left side of Expression (17)). In Expression (17), $(\partial\phi/\partial y)^{-1}$ is a function of the output variable y and the exogenous input d and is thereby evaluable by substitution of the output variable $y_j$ and the exogenous input $d_j$, and $(\partial\phi/\partial d)$ in a right side of Expression (17) is a function of the output variable y and the exogenous input d and is thereby evaluable by substitution of the output variable $y_j$ and the exogenous input $d_j$.

[Math. 45]

$$\hat{y}_j = \left(\frac{\partial\Phi}{\partial y}\right)^{-1}\left(A'(d_j)\Phi(y_j, d_j) + B'(d_j)\Psi(v_j, d_j) + c'(d_j) - \frac{\partial\Phi}{\partial d}\dot{d}_j\right) \tag{17}$$

The learning module 112 subsequently evaluates a matching degree of the estimated output with the output variable data set (step S14). More specifically, the learning module 112 evaluates the matching degree of the estimated value of the output variable y·$_j$ obtained at step S13 with the output variable data set [y·$_j$] obtained at step S12. The learning module 112 may use, for example, a mean square error (MSE) shown by Expression (18) given below, as an index of the matching degree. In the case of MSE, the smaller value of J in a left side of the equal sign indicates the higher matching degree. The learning module 112 may use another index such as a mean absolute error ratio or a cross entropy to evaluate the matching degree, in place of the mean square error.

[Math. 46]

$$J = \frac{1}{N} \Sigma_{j=1}^{N} \left( \dot{y}_j - \hat{y}_j \right)^2 \qquad (18)$$

The learning module 112 subsequently determines whether the matching degree is sufficient (step S15). For example, in the case of using MSE of Expression (18), the learning module 112 may determine that the matching degree is sufficient when the value of J is equal to or smaller than a predetermined value. According to a modification, the learning module 112 may determine that the matching degree is sufficient when a rate of change in the value of J is equal to or smaller than a predetermined value. The predetermined value may be determined arbitrarily.

When the matching degree is not sufficient (step S15: NO), the learning module 112 proceeds to step S16 to update learning parameters in the model of Expression (1) defined at step S11, for example, the function A', the function B', and the function c' included in Expression (1), and the weights $W_\psi$ and $W_\phi$ and the biases $b_\psi$ and $b_\phi$ included in Expression (5) to Expression (12). The learning module 112 may, for example, evaluate a gradient of J with respect to each of the learning parameters by back propagation and update each learning parameter based on any of various gradient methods. The learning module 112 then proceeds to step S13 and repeats the estimation and the evaluation of the output.

When the matching degree is sufficient (step S15: YES), on the other hand, the learning module 112 terminates the series of processing. In this case, the learning module 112 may output the learnt function F to the input-output module 150, may store the learnt function F in the storage module 120, or may send the learnt function F to another apparatus via the communication module 140.

When the model learning apparatus 100 of the embodiment is provided in combination with a control apparatus configured to control an operation amount of a system, the model learning apparatus 100 outputs the function F learnt by the learning module 112 to the control apparatus. The control apparatus uses the output function F and calculates an input for controlling a future output, based on an output of the system at a present time. The control apparatus outputs the calculated input to the system and controls the system.

The following describes a reason for ensuring the uniqueness of a solution in the model (equation of state) learnt by the model learning method described with reference to Fig. 2. In general, when a dynamic model that reproduces a transient phenomenon is established by a neural network (machine learning), there is no guarantee that the model is stable or, in other words, the model does not diverge. Expression (4) that is an equivalent transformation of the equation of state expressed by Expression (1) described above by using the internal variable x, which is obtained by converting the output variable y by using the mapping $\phi$, however, includes a linear differential equation with respect to the internal variable x. The internal variable u obtained by converting the input variable v by using the mapping $\psi$ is similarly a linear term of the differential equation. The respective mappings $\phi$ and $\psi$ are bijective mappings and accordingly have unique inverse functions. The internal variable x and the output variable y are convertible to each other, and the input variable v and the internal variable u are convertible to each other, so that the solution of nonlinear Expression (1) is determinable by solving linearized Expression (4). The control apparatus equipped with the model learning apparatus 100 uses the model learnt by the model learning method described with reference to Fig. 2 to improve the followability of an output from the system to a target value, while stably controlling the system.

In the model learning apparatus 100 of the embodiment described above, the model is the equation of state including the bijective mapping $\psi$ that uses the input variable v input into the system as an input thereof and the bijective mapping $\phi$ that uses the output variable y output from the system as an input thereof. This equation of state is linearized by using the respective mappings $\psi$ and $\phi$ as the internal variables. This guarantees that the solution is unique even in a control problem using a model having a nonlinear structure. This allows for determination of just one optimum value of the input variable v input into the system. When this model learning apparatus 100 is applied to a control apparatus configured to control the system, this improves the followability of an output from the system to a target value, while stably controlling the system, by using the optimum value of the input variable v. This configuration accordingly learns a model configured to determine an input that improves the followability of an output to a target value, while stably controlling the system.

In general, a model learnt by machine learning has a relatively high non-linearity. An optimal control problem that causes an output predicted by using this model to appropriately follow some target is thus likely to become a nonconvex optimization problem. Accordingly, a solution obtained is likely to vary significantly, depending on an initial condition set in the process of solving the problem. This leads to a reliability problem such as fluctuation of the input and makes it very difficult to obtain an optimal solution. The model learning apparatus 100 of the embodiment, on the other hand, guarantees that a solution is unique and thus enables an optimal control problem corresponding to a control problem of making the output (state) of the system follow a target value to become a convex optimization problem. This configuration guarantees that the solution is an optimal unique solution, regardless of the initial condition. This improves the followability of an output from the system to a target value, while stably controlling the system.

Moreover, in the model learning apparatus 100 of the embodiment, each of the mappings $\psi$ and $\phi$ included in the model of Expression (1) includes the exogenous input d that is an uncontrollable input affecting a variation of the output variable y. In the model of Expression (1), a function A'(d) and a function B'(d) that use the exogenous input d as inputs thereof respectively work as coefficients of the mappings $\psi$ and $\phi$. Additionally, the model of Expression (1) includes a function c'(d) that uses the exogenous input d as an input thereof and a time derivative term of the exogenous input d. This causes the model of Expression (1) to be an equation of state that takes into account the influence of the uncontrollable exogenous input d affecting a variation of the output variable y. Using this model thus enables a future state of the system to be predicted with high accuracy. Accordingly, this configuration learns a model that is capable of establishing a control apparatus configured to control the system with high accuracy.

In the model learning apparatus 100 of the embodiment, the equation of state of Expression (1) is linearized as shown by Expression (4) by respectively defining the mapping $\psi$ and the mapping $\phi$ in the equation of state of Expression (1) as the internal variable u and as the internal variable x. This guarantees that the equation of state expressed by Expression (1) has a unique solution. Accordingly, this configuration learns a model that is capable of establishing a control apparatus configured to determine an input that improves the followability of an output to a target value, while stably controlling the system.

Furthermore, in the model learning apparatus 100 of the embodiment, each of the mappings $\psi$ and $\phi$ is defined by using the multilayer neural network (Expression (5) to Expression (12)). Adjusting the weights $W_\psi$ and $W_\phi$ and the biases $b_\psi$ and $b_\phi$ in each layer of the multilayer neural network enables the output of the system based on the input of the input variable v calculated by using the model to approach to an actual value. Accordingly, this configuration learns a model that is capable of establishing a control apparatus configured to determine an input that further improves the followability of an output to a target value.

In the model learning apparatus 100 of the embodiment, the learning module 112 evaluates the matching degree of the output, which is estimated by using the input variable data set included in the input-output data set, with the output variable data set. The learning module 112 updates the learning parameters with respect to the model according to the valuation of this matching degree and learns the equation of state. The learning module 112 can thus learn a nonlinear equation of state according to a learning procedure using input-output data set provided in advance as teaching data. This enables the model to be learnt in accordance with an actual system. Accordingly, this configuration learns a model that is capable of establishing a control apparatus configured to furthermore improve the followability of an output from the system to a target value, while furthermore stably controlling the system.

Furthermore, in the model learning method of the embodiment, the model obtained at step S11 that is the model obtaining step is the equation of state including the bijective mapping $\psi$ that uses the input variable v input into the system as an input thereof and the bijective mapping $\phi$ that uses the output variable y output from the system as an input thereof. This equation of state is linearized by using the respective mappings $\psi$ and $\phi$ as the internal variables u and x. This guarantees that the solution is unique even in a control problem using a model having a nonlinear structure. This allows for determination of just one optimum value of the input variable v input into the system. When this model learning method is applied to a control apparatus configured to control the system, this improves the followability of an output from the system to a target value, while stably controlling the system, by using the optimum value of the input variable v. Accordingly, this configuration learns a model that is capable of establishing a control apparatus configured to determine an input that improves the followability of an output to a target value, while stably controlling the system.

<Second Embodiment>

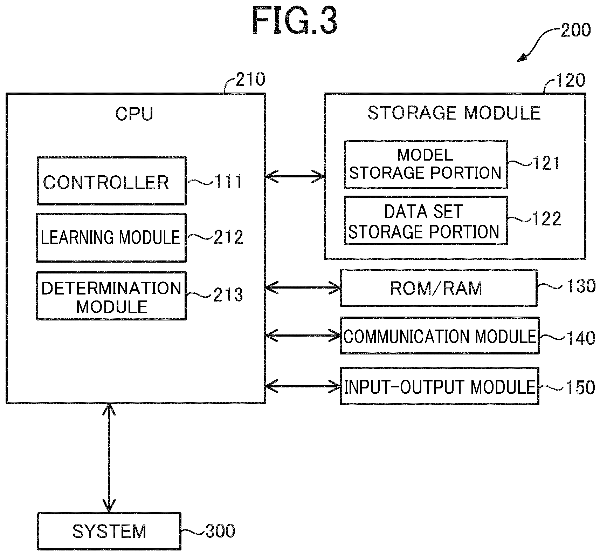

Fig. 3 is a schematic diagram illustrating the configuration of a control apparatus 200 according to a second embodiment. The control apparatus 200 of the second embodiment has a CPU 210 including a learning module 212 and a determination module 213.

The control apparatus 200 may be implemented as an in-vehicle ECU (electronic control unit). The control apparatus 200 of this embodiment may be used to control a system 300. Like the first embodiment, the system 300 is, for example, an internal combustion engine a hybrid engine, or a power train. The control apparatus 200 may be configured by a personal computer and may be used to analyze the system 300.

The control apparatus 200 includes a CPU 210, a storage module 120, a ROM/ RAM 130, a communication module 140 and an input-output module 150. The respective components of the control apparatus 200 are connected with each other by means of buses. At least part of the functional portions of the control apparatus 200 may be implemented by an ASIC (application specification integrated circuit).

The CPU 210 includes a controller 111, the learning module 212 and the determination module 213. Like the controller 111 of the first embodiment, the controller 111 loads a computer program stored in the ROM 130 and expands and executes the computer program on the RAM 130 to control the respective components of the control apparatus 200.

The learning module 212 learns a nonlinear equation of state for predicting an output variable y that indicates a state of the system 300 in a predictive control method described later. The determination module 213 uses the equation of state learnt by the learning module 212 to determine a target value of an input variable v corresponding to a target value of the output variable y.

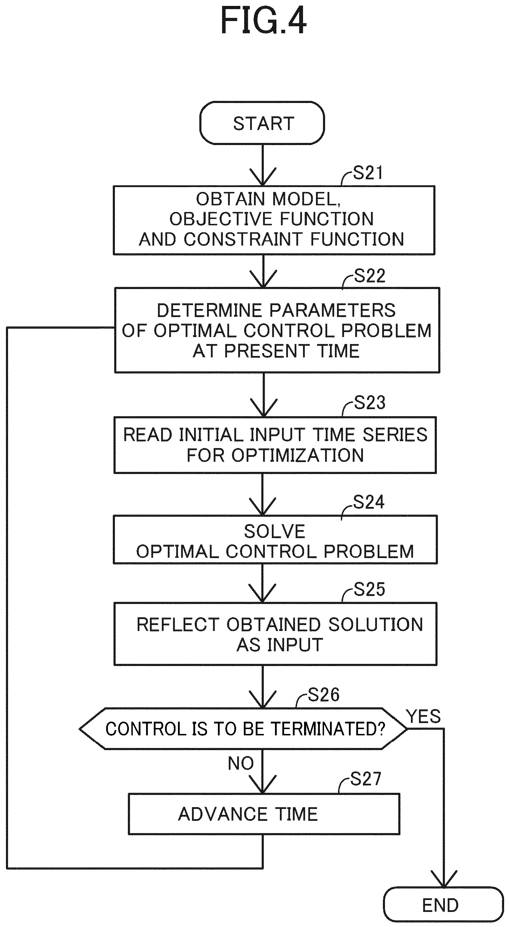

Fig. 4 is a flowchart showing a predictive control method according to the second embodiment. The predictive control method of the system 300 is performed, for example, in response to a user's request, such as activation of a predetermined application.

The learning module 212 first obtains a model, an objective function and a constraint function (step S21). More specifically, the learning module 212 reads a nonlinear equation of state stored in a model storage portion 121, an objective function J used to control the system 300 optimally, and a constraint function G. According to this embodiment, the learning module 212 reads an equation of state expressed by Expression (13) to Expression (15) given below and obtained by discretizing Expression (2) to Expression (4) given above by a predetermined time step $\Delta t$ at a discrete time k.

[Math. 47]

$$u_k = \Psi(v_k, d_k) \tag{13}$$

[Math. 48]

$$y_k = \phi^{-1}(x_k, d_k) \tag{14}$$

[Math. 49]

$$x_{k+1} = A(d_k)x_k + B(d_k)u_k + c(d_k) \tag{15}$$

where $A(d_k)$, $B(d_k)$ and $c(d_k)$ included in Expression (15) may respectively be expressed as Expression (19) to Expression (21) given below, for example, by using the function A'(d), the function B'(d) and the function c'(d) of Expression (2) to Expression (4) given above:

[Math. 50]

$$A(d_k) = I + \Delta t A'(d_k) \tag{19}$$

[Math. 51]

$$B(d_k) = \Delta t B'(d_k) \tag{20}$$

[Math. 52]

$$c(d_k) = \Delta t c'(d_k) \tag{21}$$

The learning module 212 subsequently determines parameters of an optimal control problem at a present time (step S22). More specifically, the learning module 212 sets a present time as a time k and reads an output variable $y_k$, a control input $v_{k-1}$, an exogenous input $d_k$ and a target value $y_{kt}$ obtained from sensors or the like provided in advance at respective locations of the system 300. The learning module 212 uses Expression (13) to Expression (15) to calculate an internal variable $x_k$, a target value $x_{kt}$ of the internal variable $x_k$ and an internal variable $u_{k-1}$.

The determination module 213 then reads an initial input time series for optimization (step S23). More specifically, the determination module 213 determines initial values of an input time series $u_k, ..., u_{kf}$ starting from the discrete time k as a starting point to a time $k_f = k+N$ (where N denotes a predetermined natural number).

The determination module 213 subsequently solves the optimal control problem (step S24). More specifically, the determination module 213 solves the optimal control problem shown by Expression (22) and Expression (23) given below:

[Math. 53]

$$\underset{\{u_\kappa\}_{\kappa=k,\ldots,k_f}}{\text{minimize}} J = g\left(x_k, \ldots, x_{k_f+1}, u_{k-1}, \ldots, u_{k_f}, d_{k-1}, \ldots, d_{k_f}\right) + \sum_{\kappa=k}^{k_f}\left(x_{\kappa+1} - \right.$$

$$\left. x_{(\kappa+1)t}\right)^T Q\left(x_{\kappa+1} - x_{(\kappa+1)t}\right) \tag{22}$$

[Math. 54]

$$\text{subject to } G\left(x_k, \ldots, x_{k_f+1}, u_{k-1}, \ldots, u_{k_f}, d_{k-1}, \ldots, d_{k_f}\right) \leq 0 \tag{23}$$

where $x_\kappa$ ($\kappa = k, \ldots, k_f+1$) follows Expression (15); g denotes an arbitrary scalar function that is convex to $x_k, \ldots, x_{kf+1}$ and $u_{k-1}, \ldots, u_{kf}$; the constraint function G is an arbitrary vector function that is convex to $x_k, \ldots, x_{kf+1}$ and $u_{k-1}, \ldots, u_{kf}$; Q denotes a positive definite symmetric matrix of $n \times n$; and the target value $x_{kt}$ is a target value of x at the discrete time k and is converted from the target value $y_{kt}$ of the output variable y at the discrete time k by $x_{kt} = \phi(y_{kt}, d_k)$.

The optimal control problem shown by Expression (22) and Expression (23) determines a time series of $u_\kappa$ ($\kappa = k, \ldots, k_f$) that minimizes the objective function J. In order to decrease Expression (24) included in Expression (22), $u_\kappa$ ($\kappa = k, \ldots, k_f$) is required to promptly follow the target value. Accordingly, the solution of $u_\kappa$ ($\kappa = k, \ldots, k_f$) that minimizes the objective function J including Expression (24) achieves control of making $u_\kappa$ ($\kappa = k, \ldots, k_f$) promptly follow the target value.

[Math. 55]

$$\left(x_{\kappa+1} - x_{(\kappa+1)t}\right)^T Q\left(x_{\kappa+1} - x_{(\kappa+1)t}\right) \tag{24}$$

The scalar function g is set freely to have an additional function and may be set, for example, as follows:

[Math. 56]

$$g = \sum_{\kappa=k}^{k_f}\left((u_k)^T R u_\kappa + (u_\kappa - u_{\kappa-1})^T S(u_\kappa - u_{\kappa-1})\right) \tag{25}$$

where each of R and S denotes a positive definite $m \times m$ symmetric matrix. Expression (26) included in Expression (25) decreases with an approach of the internal variable u to zero, and Expression (27) included in Expression (25) decreases with a decrease in time change of the internal variable u. Accordingly, the solution that minimizes the objective function J makes the internal variable u closest possible to zero and minimizes a change of the internal variable u.

[Math. 57]

$$(u_k)^T R u_\kappa \tag{26}$$

[Math. 58]

$$(u_\kappa - u_{\kappa-1})^T S(u_\kappa - u_{\kappa-1}) \tag{27}$$

Desired constraint conditions may be set for the constraint function G that is the vector function. For example, the following conditions may be set for the constraint function G:

[Math. 59]

$$G = \begin{bmatrix} \underline{u}_k - u_k \\ \vdots \\ \underline{u}_{k_f} - u_{k_f} \\ u_k - \bar{u}_k \\ \vdots \\ u_{k_f} - \bar{u}_{k_f} \end{bmatrix} \tag{28}$$

Expression (28) expresses upper limit and lower limit constraints shown by Expression (29) given below:

[Math. 60]

$$\underline{u}_\kappa \leq u_\kappa \leq \bar{u}_\kappa \left(\kappa = k, \ldots, k_f\right) \tag{29}$$

The determination module 213 solves the problem described above to determine the internal variable $u_k$ and then uses Expression (13) given above to determine the target value of the input variable $v_k$.

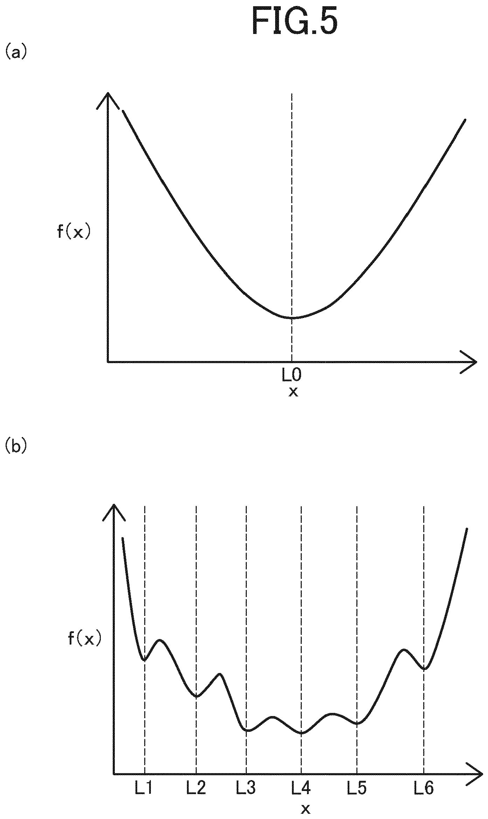

Fig. 5 is a schematic diagram illustrating one example of a convex function and a nonconvex function. The convex function herein denotes a function that satisfies Expression (30) given below with respect to any t, where 0< t< 1 and any x and y:

[Math. 61]

$$f\big((1-t)x + ty\big) \le (1-t)f(x) + tf(y) \qquad (30)$$

Intuitively, a function in such a shape as shown in Fig. 5(a) is a convex function, and a function in such a shape as shown in Fig. 5(b) is a nonconvex function. In the case of the convex function, a unique optimum value (a minimum value L0 in the case of Fig. 5(a)) can be determined. In the case of the nonconvex function, however, as shown in Fig. 5(b), there are a plurality of local minimum values (values L1, L2, L3, L4, L5 and L6 in the case of Fig. 5(b)), so that an optimum value is not necessarily determined.

At step S24, the determination module 213 solve the optimal control problem of Expressions (22) and (23) by using the initial values determined at step S23 under the conditions determined at step S22. This problem may be solved by using, for example, a mathematical programming method, such as a sequential quadratic programming method.

The controller 111 then reflects the obtained solution as an input into the system 300 (step S25). More specifically, the controller 111 converts the optimal solution $u_k$, ..., $u_{kf}$ obtained at step S24 into $v_k$, ..., $v_{kf}$ by using the mapping $\psi$ of Expression (13) and specifies $v_k$ in the converted optimal solution as an actual control input $v_k$.

The controller 111 subsequently determines whether the control is to be terminated or not (step S26). More specifically, the controller 111 determines whether the control is to be terminated or not, according to the state of reception of an external signal to terminate the control. When the controller 111 receives the external signal, the controller 111 outputs the predicted control input $v_k$ to outside and terminates a current cycle of the control process. The predicted control input $v_k$ may be output to the input-output module 150, may be stored in the storage module 120 or may be sent to another apparatus, for example, a caller ECU, via the communication module 140. When the controller 111 does not receive the external signal, the controller 111 proceeds to step S27.

When the controller 111 does not receive the external signal at step S26, the controller 111 advances the time (step S27). After advancing the time, the controller 111 returns to step S22. The processing of steps S22 to S25 is then repeated, and the controller 111 determines again whether the controller 111 receives the external signal to terminate the control at step S26.

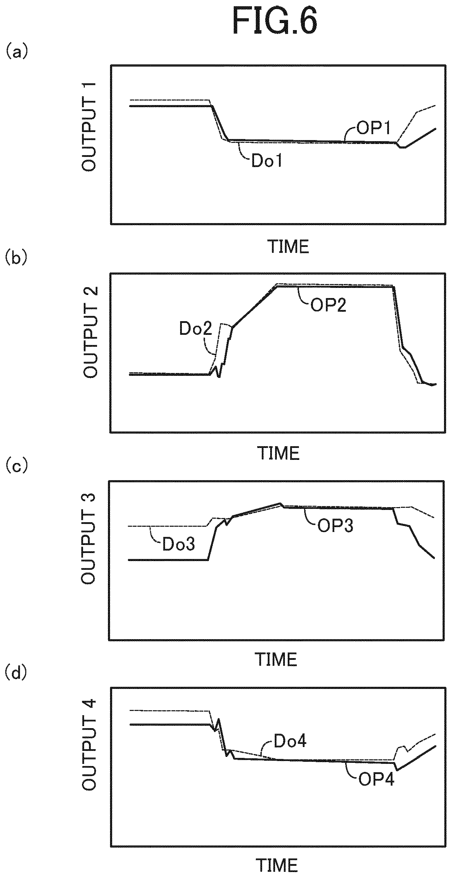

Fig. 6 is a first schematic diagram illustrating results of calculation in the model learning apparatus 100. The following describes the results of calculation to predict an input from an output of a virtual system by using the model learning apparatus 100 of the first embodiment. Fig. 6 shows time changes of a plurality of outputs in a virtual system as the results of current calculation. Fig. 6 illustrates time changes of four outputs ("output 1", "output 2", "output 3" and "output 4") by solid line curves OP1, OP2, OP3 and OP4. Among the four outputs, the output 1, the output 2 and the output 3 are different types of outputs, and target values are set in the respective outputs (as shown by dotted line curves Dol, Do2 and Do3 of the output 1, the output 2 and the output 3). With respect to the output 4, an upper limit constraint is shown by a dotted line curve Do4.

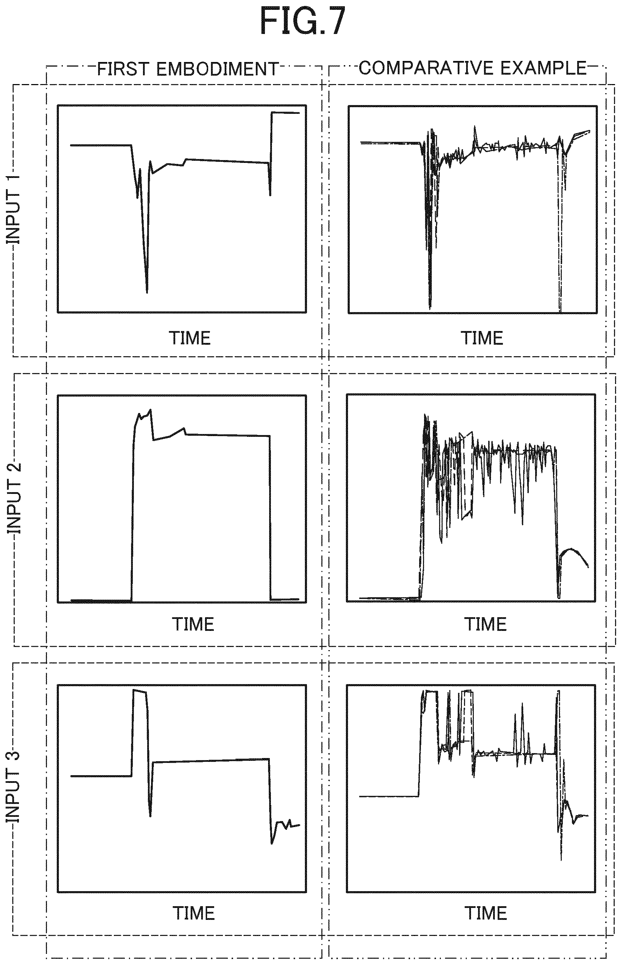

Fig. 7 is a second schematic diagram illustrating results of calculation in two model learning apparatuses. Fig. 7 shows the results of calculation of inputs to cause the four outputs shown in Fig. 6 to be output from the virtual system. Fig. 7 illustrates time changes of three inputs ("input 1", "input 2" and "input 3") calculated by using the model learning apparatus of the embodiment, inside of an encirclement of one-dot chain line. Fig. 7 also illustrates time changes of the three inputs calculated by using a model learning apparatus of a comparative example, inside of an encirclement of two-dot chain line. Unlike in the model learning apparatus of the embodiment, in the model learning apparatus of the comparative example, a bijective mapping is not employed in the model for a mapping that uses an input variable and an output variable as inputs thereof.

The input 1 to the input 3 shown in Fig. 7 are the results of calculation under a plurality of different initial conditions with respect to the four outputs shown in Fig. 6. In the model learning apparatus of the comparative example, the different initial conditions cause fluctuations of the values of the input 1 to the input 3. For example, even the input 2 is unstable and fluctuates. Accordingly, it is difficult for a prediction process of the comparative example to determine just one input that achieves the output 1 to the output 4. In the model learning apparatus of the embodiment, on the other hand, even the different initial conditions do not cause fluctuations of the values of the input 1 to the input 3. Accordingly, the model learning apparatus of the embodiment allows for determination of just one input and thereby stabilizes the input.

In the control apparatus 200 of the embodiment described above, the model obtained by the leaning module 212 is the equation of state including the bijective mapping $\psi$ that uses the input variable v input into the system 300 as an input thereof and the bijective mapping $\phi$ that uses the output variable y output from the system 300 as an input thereof. This equation of state is linearized by using the respective mappings $\psi$ and $\phi$ as the internal variables. This guarantees that the solution is unique even in a control problem using a model having a nonlinear structure. Accordingly, this configuration learns a model that is capable of establishing a control apparatus configured to determine an input that improves the followability of an output to a target value, while stably controlling the system 300.

In the control apparatus 200 of the embodiment, the learning module 212 learns the equation of state expressed by Expression (13) to Expression (15) obtained by discretizing Expressions (2) to (4) by the time step at the discrete time k. This configuration limits the numbers of the internal variables x and u and thereby shortens a time period required for learning the model. Accordingly, this configuration learns, in a relatively short time, a model that is capable of establishing a control apparatus configured to determine an input that improves the followability of an output to a target value, while stably controlling the system 300.

In the control apparatus 200 of the embodiment, the determination module 213 uses the equation of state expressed by Expressions (13) to (15) and learnt by the learning module 212 to solve the optimal control problem shown by Expression (22) and Expression (23) and thereby determine the input variable v. This causes the optimal control problem to become a control problem with respect to a linear model and causes the optimal control problem using Expressions (13) to (15) to become a convex optimization problem. Accordingly, this configuration allows for determination of just one optimum value of the input variable v input into the system 300. The control apparatus thus improves the followability of an output from the system 300 to a target value, while stably controlling the system 300.

<Modifications of Embodiments>

The present disclosure is not limited to the embodiments described above but may be implemented by a variety of other aspects without departing from the scope of the disclosure. Some examples of possible modification are given below. In the above embodiments, part of the configuration implemented by hardware may be replaced by software. On the contrary, part of the configuration implemented by software may be replaced by hardware.

[Modification 1]

The above embodiments illustrate the examples of the configuration of the model learning apparatus and the configuration of the control apparatus provided with the model learning apparatus. The configuration of the model learning apparatus and the configuration of the control apparatus may, however, be modified in various ways and are not limited to the configurations of these embodiments. For example, at least one of the model learning apparatus and the control apparatus may be configured by cooperation of a plurality of information processing apparatuses (including a server apparatus and an in-vehicle ECU) located on a network.

[Modification 2]

The above embodiments illustrate the examples of the procedures of the model learning method (shown in Fig. 2) and the predictive control method (shown in Fig. 4). The procedures of these methods may, however, be modified in various ways and are not limited to the procedures of these embodiments. For example, part of the steps may be omitted, or other steps that are not described herein may be added. The sequence of execution of part of the steps may also be changed.

[Modification 3]

According to the first embodiment, the equation of state is defined by Expression (1), and the respective mappings $\psi$ and $\phi$ included in Expression (1) are defined by the respective internal variables u and x shown by Expressions (2) and (3). These definitions of the respective mappings $\psi$ and $\phi$ are, however, only illustrative, and the mappings $\psi$ and $\phi$ may be defined in any forms. The mapping that uses an uncontrollable exogenous input d affecting a variation in an output variable y, in addition to the internal variable, as inputs thereof provides a model configured to predict a future state of the system with high accuracy.

[Modification 4]

According to the first embodiment, the learning module 112 uses the matching degree to learn the model at step S14 in the model learning method (shown in Fig. 2). According to a modification, however, the learning module 112 may determine whether constraint conditions are satisfied, in addition to the evaluation for the matching degree. For example, the constraint conditions may respectively be set for the function A'(d), the function B'(d) and the function c'(d) included in the equation of state of Expression (1).

[Modification 5]

According to the first embodiment, the mapping $\psi$, the mapping $\phi$, the function A'(d), the function B'(d) and the function c'(d) are output in response to input of the exogenous input d. According to a modification, however, the outputs of the mapping $\psi$, the mapping $\phi$, the function A'(d), the function B'(d) and the function c'(d) may not be changed, depending on the exogenous input d.

[Modification 6]

According to the second embodiment, the learning module 212 solves the optimal control problem by using the discretized equation of state expressed by Expression (13) to Expression (15) converted from Expression (2) to Expression (4). According to a modification, however, the learning module 212 may solve the optimal control problem without discretizing the equation of state. Solving the optimal control problem by using the equation of state converted to Expression (13) to Expression (15) limits the numbers of the internal variables x and u and thus relatively shortens the time period required for learning the model.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

Reference Signs List

| | |
|---|---|
| 100 | model learning apparatus |
| 110, 210 | CPU |
| 111 | controller |
| 112, 212 | learning module |
| 120 | storage module |
| 121 | model storage portion |
| 122 | data set storage portion |
| 130 | ROM/ RAM |
| 140 | communication module |
| 150 | input-output module |
| 200 | control apparatus |
| 213 | determination module |
| 300 | system |

**Claims**

1. A control apparatus (200) configured to control a system (300), comprising:

   a model learning apparatus (100) configured to learn a model that shows a relationship between an input variable v input into a system (300) and an output variable y output from the system (300), and
   a determination portion (213) configured to determine a target value of the input variable v corresponding to a target value of the output variable y by using the model learnt by the model learning apparatus (100),
   the model learning apparatus (100) comprising:

      a model storage portion (121) configured to store a model used to learn a nonlinear equation of state for predicting the output variable y by using the input variable v, and
      a learning portion (112, 212) configured to learn the equation of state by using the model and an input-output data set including multiple sets of input variable data and output variable data with respect to the model, wherein,
      the model is an equation of state including a bijective mapping $\psi$ that uses the input variable v as an input thereof and a bijective mapping $\varphi$ that uses the output variable y as an input,
      the model is defined by an expression (1):

[Math. 1]

$$\dot{y} = \left(\frac{\partial \Phi}{\partial y}\right)^{-1} \left\{ A'(d)\Phi(y,d) + B'(d)\Psi(v,d) + c'(d) - \frac{\partial \Phi}{\partial d}\dot{d} \right\} \tag{1}$$

where a left side of an equal sign is a time derivative of an n-dimensional vector that indicates the output variable y, where n denotes an integer number; and
in a right side of the equal sign,
the input variable v is an m-dimensional vector, where m denotes an integer number, an exogenous input d is a p-dimensional vector that indicates an uncontrollable input affecting a variation of the output variable y, where p denotes an integer number,
the mapping $\psi$ is a function that gives an m-dimensional vector by using the input variable v and the exogenous variable d as inputs thereof,
the mapping $\varphi$ is a function that gives an n-dimensional vector by using the output variable y and the exogenous variable d as inputs thereof, and
a function A', a function B' and a function c' are respectively functions that give an n×n matrix, an n×m matrix, and an n-dimensional vector by using the exogeneous input d as an input,
in the expression (1), when the mapping $\psi$ is defined as an internal variable u and the mapping $\varphi$ is defined as an internal variable x, the learning portion (112, 212) learns the equation of state defined by an expression (2) to an expression (4):
[Math. 2]

$$u = \Psi(v,d) \tag{2};$$

[Math. 3]

$$y = \Phi^{-1}(x,d) \tag{3};$$

and
[Math. 4]

$$\dot{x} = A'(d)x + B'(d)u + c'(d) \tag{4},$$

the mapping $\psi$ is defined by an expression (5) to an expression (8):
[Math. 5]

$$\Psi(v,d) = v_\Psi^{(L\Psi)} \tag{5};$$

[Math. 6]

$$v_\Psi^{(i)} = \psi_\Psi^{(i)}\left(u_\Psi^{(i)}, d\right) \tag{6};$$

[Math. 7]

$$u_\Psi^{(i)} = W_\Psi^{(i)}(d)v_\Psi^{(i-1)} + b_\Psi^{(i)}(d) \tag{7};$$

and
[Math. 8]

$$v_\Psi^{(0)} = v \tag{8},$$

the mapping $\varphi$ is defined by an expression (9) to an expression (12):

[Math. 9]

$$\Phi(y, d) = y_\Phi^{(L_\Phi)} \qquad (9);$$

[Math. 10]

$$y_\Phi^{(i)} = \varphi_\Phi^{(i)}\left(x_\Phi^{(i)}, d\right) \qquad (10);$$

[Math. 11]

$$x_\Phi^{(i)} = W_\Phi^{(i)}(d)y_\Phi^{(i-1)} + b_\Phi^{(i)}(d) \qquad (11);$$

and
[Math. 12]

$$y_\Phi^{(0)} = y \qquad (12),$$

where i denotes a layer number in a multilayer neural network; each of $L_\psi$ and $L_\varphi$ denotes number of layers in the multilayer neural network; each of $W_\psi$ and $W_\varphi$ denotes a weight, each of $b_\psi$ and $b_\varphi$ denotes a bias; and each of $\psi_\psi$ and $\varphi_\varphi$ is an activation function and denotes an arbitrary bijective mapping that gives an output of an identical dimension with a dimension of an input,

the learning portion (112, 212) learns an equation of state expressed by an expression (13) to an expression (15) obtained by discretizing the equation (2) to the equation (4) by a time step at a discrete time k:
[Math. 13]

$$u_k = \Psi(v_k, d_k) \qquad (13);$$

[Math. 14]

$$y_k = \phi^{-1}(x_k, d_k) \qquad (14);$$

and
[Math. 15]

$$x_{k+1} = A(d_k)x_k + B(d_k)u_k + c(d_k) \qquad (15),$$

the determination portion (213) solves an optimal control problem using the equation of state expressed by the expression (13) to the expression (15) learnt by the learning portion (112, 212).

2. The control apparatus (200) according to claim 1,
wherein the learning portion (112, 212) is configured to:

give a set of the input variable data in the input-output data set to the model and estimate an output;
evaluate a matching degree of the estimated output with a set of the output variable data in the input-output data set; and
update a learning parameter of the model according to a result of the evaluation, so as to learn the equation of state.

3. A control method of a system (300), comprising:

a process of learning a model that shows a relationship between an input variable v input into a system (300) and an output variable y output from the system (300),
a process of determining target value of the input variable v corresponding to a target value of the output variable y

**18**

by using the model learnt in the process of learning a model, and
a process of controlling the system (300) using the determined target value of the input variable v,
a process of learning a model comprising:

a process of obtaining a model used to learn a nonlinear equation of state for predicting the output variable y by using the input variable v; and
a process of learning the equation of state by using the model and an input-output data set including multiple sets of input variable data and output variable data with respect to the model, wherein
the model is an equation of state including a bijective mapping $\psi$ that uses the input variable v as an input thereof and a bijective mapping $\varphi$ that uses the output variable y as an input,
the model is defined by an expression (1):
[Math. 1]

$$\dot{y} = \left(\frac{\partial \Phi}{\partial y}\right)^{-1} \left\{ A'(d)\Phi(y, d) + B'(d)\Psi(v, d) + c'(d) - \frac{\partial \Phi}{\partial d}\dot{d} \right\} \tag{1}$$

where a left side of an equal sign is a time derivative of an n-dimensional vector that indicates the output variable y, where n denotes an integer number; and
in a right side of the equal sign,
the input variable v is an m-dimensional vector, where m denotes an integer number,
an exogenous input d is a p-dimensional vector that indicates an uncontrollable input affecting a variation of the output variable y, where p denotes an integer number,
the mapping $\psi$ is a function that gives an m-dimensional vector by using the input variable v and the exogenous variable d as inputs thereof,
the mapping $\varphi$ is a function that gives an n-dimensional vector by using the output variable y and the exogenous variable d as inputs thereof, and
a function A', a function B' and a function c' are respectively functions that give an n×n matrix, an n×m matrix, and an n-dimensional vector by using the exogenous input d as an input,
in the expression (1), when the mapping $\psi$ is defined as an internal variable u and the mapping $\varphi$ is defined as an internal variable x, a learning portion (112, 212) learns the equation of state defined by an expression (2) to an expression (4):
[Math. 2]

$$u = \Psi(v, d) \tag{2};$$

[Math. 3]

$$y = \Phi^{-1}(x, d) \tag{3};$$

and
[Math. 4]

$$\dot{x} = A'(d)x + B'(d)u + c'(d) \tag{4},$$

the mapping $\psi$ is defined by an expression (5) to an expression (8):
[Math. 5]

$$\Psi(v, d) = v_{\Psi}^{(L\Psi)} \tag{5};$$

[Math. 6]

$$v_{\Psi}^{(i)} = \psi_{\Psi}^{(i)}\left(u_{\Psi}^{(i)}, d\right) \tag{6};$$

[Math. 7]

$$u_\Psi^{(i)} = W_\Psi^{(i)}(d)v_\Psi^{(i-1)} + b_\Psi^{(i)}(d) \tag{7};$$

and
[Math. 8]

$$v_\Psi^{(0)} = v \tag{8},$$

the mapping $\varphi$ is defined by an expression (9) to an expression (12):
[Math. 9]

$$\Phi(y, d) = y_\Phi^{(L_\Phi)} \tag{9};$$

[Math. 10]

$$y_\Phi^{(i)} = \varphi_\Phi^{(i)}\left(x_\Phi^{(i)}, d\right) \tag{10};$$

[Math. 11]

$$x_\Phi^{(i)} = W_\Phi^{(i)}(d)y_\Phi^{(i-1)} + b_\Phi^{(i)}(d) \tag{11};$$

and
[Math. 12]

$$y_\Phi^{(0)} = y \tag{12},$$

where i denotes a layer number in a multilayer neural network; each of $L_\psi$ and $L_\varphi$ denotes number of layers in the multilayer neural network; each of $W_\psi$ and $W_\varphi$ denotes a weight, each of $b_\psi$ and $b_\varphi$ denotes a bias; and each of $\psi_\psi$ and $\varphi_\varphi$ is an activation function and denotes an arbitrary bijective mapping that gives an output of an identical dimension with a dimension of an input,
in the process of learning the equation of state, the learning portion (112, 212) learns an equation of state expressed by an expression (13) to an expression (15) obtained by discretizing the equation (2) to the equation (4) by a time step at a discrete time k:
[Math. 13]

$$u_k = \Psi(v_k, d_k) \tag{13};$$

[Math. 14]

$$y_k = \phi^{-1}(x_k, d_k) \tag{14};$$

and
[Math. 15]

$$x_{k+1} = A(d_k)x_k + B(d_k)u_k + c(d_k) \tag{15},$$

in the process of determining, a determination portion (213) solves an optimal control problem using the equation of state expressed by the expression (13) to the expression (15) learnt by the learning portion (112, 212).

4. A computer program that causes an information processing apparatus to control a system (300), the computer program causing the information processing apparatus to perform:

**EP 3 985 461 B1**

a function of learning a model that shows a relationship between an input variable v input into a system (300) and an output variable y output from the system (300),
a function of determining target value of the input variable v corresponding to a target value of the output variable y by using the model learnt in the process of learning a model, and
a function of controlling the system (300) using the determined target value of the input variable v,
a function of learning a model comprising:

a function of obtaining a model used to learn a nonlinear equation of state for predicting the output variable y by using the input variable v; and
a function of learning the equation of state by using the model and an input-output data set including multiple sets of input variable data and output variable data with respect to the model, wherein
the model is an equation of state including a bijective mapping $\psi$ that uses the input variable v as an input thereof and a bijective mapping $\varphi$ that uses the output variable y as an input thereof,
the model is defined by an expression (1):
[Math. 1]

$$\dot{y} = \left(\frac{\partial \Phi}{\partial y}\right)^{-1} \left\{ A'(d)\Phi(y,d) + B'(d)\Psi(v,d) + c'(d) - \frac{\partial \Phi}{\partial d}\dot{d} \right\} \tag{1}$$

where a left side of an equal sign is a time derivative of an n-dimensional vector that indicates the output variable y, where n denotes an integer number; and
in a right side of the equal sign,
the input variable v is an m-dimensional vector, where m denotes an integer number,
an exogenous input d is a p-dimensional vector that indicates an uncontrollable input affecting a variation of the output variable y, where p denotes an integer number,
the mapping $\psi$ is a function that gives an m-dimensional vector by using the input variable v and the exogenous variable d as inputs thereof,
the mapping $\varphi$ is a function that gives an n-dimensional vector by using the output variable y and the exogenous variable d as inputs thereof, and
a function A', a function B' and a function c' are respectively functions that give an n×n matrix, an n×m matrix, and an n-dimensional vector by using the exogenous input d as an input,
in the expression (1), when the mapping $\psi$ is defined as an internal variable u and the mapping $\varphi$ is defined as an internal variable x, the function of learning the equation of state learns the equation of state defined by an expression (2) to an expression (4):
[Math. 2]

$$u = \Psi(v,d) \tag{2};$$

[Math. 3]

$$y = \Phi^{-1}(x,d) \tag{3};$$

and
[Math. 4]

$$\dot{x} = A'(d)x + B'(d)u + c'(d) \tag{4},$$

the mapping $\psi$ is defined by an expression (5) to an expression (8):
[Math. 5]

$$\Psi(v,d) = v_{\Psi}^{(L\Psi)} \tag{5};$$

[Math. 6]

$$v_\Psi^{(i)} = \psi_\Psi^{(i)}\left(u_\Psi^{(i)}, d\right) \tag{6};$$

[Math. 7]

$$u_\Psi^{(i)} = W_\Psi^{(i)}(d)v_\Psi^{(i-1)} + b_\Psi^{(i)}(d) \tag{7};$$

and
[Math. 8]

$$v_\Psi^{(0)} = v \tag{8},$$

the mapping $\varphi$ is defined by an expression (9) to an expression (12):
[Math. 9]

$$\Phi(y, d) = y_\Phi^{(L_\Phi)} \tag{9};$$

[Math. 10]

$$y_\Phi^{(i)} = \varphi_\Phi^{(i)}\left(x_\Phi^{(i)}, d\right) \tag{10};$$

[Math. 11]

$$x_\Phi^{(i)} = W_\Phi^{(i)}(d)y_\Phi^{(i-1)} + b_\Phi^{(i)}(d) \tag{11};$$

and
[Math. 12]

$$y_\Phi^{(0)} = y \tag{12},$$

where i denotes a layer number in a multilayer neural network; each of $L_\psi$ and $L_\varphi$ denotes number of layers in the multilayer neural network; each of $W_\psi$ and $W_\varphi$ denotes a weight, each of $b_\psi$ and $b_\varphi$ denotes a bias; and each of $\psi_\psi$ and $\varphi_\varphi$ is an activation function and denotes an arbitrary bijective mapping that gives an output of an identical dimension with a dimension of an input,
the function of learning the equation of state learns an equation of state expressed by an expression (13) to an expression (15) obtained by discretizing the equation (2) to the equation (4) by a time step at a discrete time k:
[Math. 13]

$$u_k = \Psi(v_k, d_k) \tag{13};$$

[Math. 14]

$$y_k = \phi^{-1}(x_k, d_k) \tag{14};$$

and
[Math. 15]

$$x_{k+1} = A(d_k)x_k + B(d_k)u_k + c(d_k) \tag{15},$$

the function of determining solves an optimal control problem using the equation of state expressed by the expression (13) to the expression (15) learnt by the function of learning the equation of state.

**Patentansprüche**

1. Steuervorrichtung (200), die ausgebildet ist zum Steuern eines Systems (300), mit:

einer Modelllernvorrichtung (100), die ausgebildet ist zum Erlernen eines Modells, das eine Beziehung zwischen einer Eingangsvariablen v, die in ein System (300) eingegeben wird, und einer Ausgangsvariablen y, die von dem System (300) ausgegeben wird, zeigt, und
einem Bestimmungsabschnitt (213), der ausgebildet ist zum Bestimmen eines Zielwerts der Eingangsvariablen v in Entsprechung zu einem Zielwert der Ausgangsvariablen y unter Verwendung des Modells, das durch die Modelllernvorrichtung (100) erlernt wird,
bei der die Modelllernvorrichtung (100) aufweist:

einen Modellspeicherabschnitt (121), der ausgebildet ist zum Speichern eines Modells, das zum Erlernen einer nichtlinearen Zustandsgleichung zum Vorhersagen der Ausgangsvariablen y unter Verwendung der Eingangsvariablen v verwendet wird, und
einen Lernabschnitt (112, 212), der ausgebildet ist zum Erlernen der Zustandsgleichung unter Verwendung des Modells und eines Eingabe-Ausgabe-Datensatzes mit mehreren Sätzen von Eingangsvariablendaten und Ausgangsvariablendaten in Bezug auf das Modell, wobei
das Modell eine Zustandsgleichung mit einer bijektiven Abbildung $\psi$, die die Eingangsvariable v als eine Eingabe derselben verwendet, und einer bijektiven Abbildung $\varphi$, die die Ausgangsvariable y als eine Eingabe verwendet, ist,
das Modell durch einen Ausdruck (1) definiert ist:
[Math. 1]

$$\dot{y} = \left(\frac{\partial \Phi}{\partial y}\right)^{-1} \left\{ A'(d)\Phi(y,d) + B'(d)\Psi(v,d) + c'(d) - \frac{\partial \Phi}{\partial d}\dot{d} \right\} \tag{1}$$

wobei eine linke Seite eines Gleichheitszeichens eine zeitliche Ableitung eines n-dimensionalen Vektors ist, der die Ausgangsvariable y angibt, wobei n eine ganze Zahl ist; und
auf der rechten Seite des Gleichheitszeichens
die Eingangsvariable v ein m-dimensionaler Vektor ist, wobei m eine ganze Zahl ist, eine exogene Eingabe d ein p-dimensionaler Vektor ist, der eine nicht steuerbare Eingabe angibt, die sich auf eine Variation der Ausgangsvariablen y auswirkt, wobei p eine ganze Zahl ist,
die Abbildung $\psi$ eine Funktion ist, die einen m-dimensionalen Vektor unter Verwendung der Eingangsvariablen v und der exogenen Variablen d als Eingaben derselben ergibt,
die Abbildung $\varphi$ eine Funktion ist, die einen n-dimensionalen Vektor unter Verwendung der Ausgangsvariablen y und der exogenen Variablen d als Eingaben derselben ergibt und
eine Funktion A', eine Funktion B' und eine Funktion c' jeweils Funktionen sind, die eine n×n-Matrix, eine n×m-Matrix und einen n-dimensionalen Vektor unter Verwendung der exogenen Eingabe d als eine Eingabe ergeben,
in dem Ausdruck (1), wenn die Abbildung $\psi$ als eine interne Variable u definiert wird und die Abbildung $\varphi$ als eine interne Variable x definiert wird, der Lernabschnitt (112, 212) die Zustandsgleichung erlernt, die durch einen Ausdruck (2) bis einen Ausdruck (4) definiert ist:
[Math. 2]

$$u = \Psi(v,d) \tag{2};$$

[Math. 3]

$$y = \Phi^{-1}(x,d) \tag{3};$$

und
[Math. 4]

$$\dot{x} = A'(\mathrm{d})x + B'(\mathrm{d})u + c'(\mathrm{d}) \tag{4},$$

die Abbildung $\psi$ durch einen Ausdruck (5) bis einen Ausdruck (8) definiert ist:
[Math. 5]

$$\Psi(\mathrm{v},\mathrm{d}) = \mathrm{v}_\Psi^{(L_\Psi)} \tag{5};$$

[Math. 6]

$$\mathrm{v}_\Psi^{(i)} = \psi_\Psi^{(i)}\left(\mathrm{u}_\Psi^{(i)}, d\right) \tag{6};$$

[Math. 7]

$$\mathrm{u}_\Psi^{(i)} = \mathrm{W}_\Psi^{(i)}(d)\mathrm{v}_\Psi^{(i-1)} + \mathrm{b}_\Psi^{(i)}(d) \tag{7};$$

und
[Math. 8]

$$\mathrm{v}_\Psi^{(0)} = v \tag{8},$$

die Abbildung $\varphi$ durch einen Ausdruck (9) bis einen Ausdruck (12) definiert ist:
[Math. 9]

$$\Phi(\mathrm{y},\mathrm{d}) = \mathrm{y}_\Phi^{(L_\Phi)} \tag{9};$$

[Math. 10]

$$\mathrm{y}_\Phi^{(i)} = \varphi_\Phi^{(i)}\left(\mathrm{x}_\Phi^{(i)}, d\right) \tag{10};$$

[Math. 11]

$$\mathrm{x}_\Phi^{(i)} = \mathrm{W}_\Phi^{(i)}(d)\mathrm{y}_\Phi^{(i-1)} + \mathrm{b}_\Phi^{(i)}(d) \tag{11};$$

und
[Math. 12]

$$\mathrm{y}_\Phi^{(0)} = y \tag{12},$$

wobei i eine Schichtzahl in einem neuronalen Netz mit mehreren Schichten angibt; $L_\Psi$ und $L_\varphi$ jeweils eine Anzahl von Schichten in dem neuronalen Netz mit mehreren Schichten angeben; $W_\Psi$ und $W_\varphi$ jeweils ein Gewicht angeben, wobei $b_\Psi$ und $b_\varphi$ jeweils einen Bias angeben; und $\psi_\Psi$ und $\varphi_\varphi$ jeweils eine Aktivierungsfunktion sind und eine beliebige bijektive Abbildung angeben, die eine Ausgabe mit einer identischen Dimension zu einer Dimension einer Eingabe ergibt,
der Lernabschnitt (112, 212) eine Zustandsgleichung erlernt, die durch einen Ausdruck (13) bis einen Ausdruck (15) ausgedrückt wird, die durch Diskretisieren der Gleichung (2) bis zu der Gleichung (4) durch einen Zeitschritt bei einer diskreten Zeit k erhalten werden:
[Math. 13]

$$u_k = \Psi(v_k, d_k) \tag{13};$$

[Math. 14]

$$y_k = \phi^{-1}(x_k, d_k) \qquad\qquad (14);$$

und
[Math. 15]

$$x_{k+1} = A(d_k)x_k + B(d_k)u_k + c(d_k) \qquad\qquad (15),$$

der Bestimmungsabschnitt (213) ein Optimale-Steuerung-Problem unter Verwendung der Zustandsgleichung löst, die durch den Ausdruck (13) bis zu dem Ausdruck (15) ausgedrückt wird und durch den Lernabschnitt (112, 212) erlernt wird.

2. Steuervorrichtung (200) nach Anspruch 1,
bei der der Lernabschnitt (112, 212) ausgebildet ist zum:

Eingeben eines Satzes der Eingangsvariablendaten in dem Eingabe-Ausgabe-Datensatz in das Modell und Abschätzen einer Ausgabe;
Evaluieren eines Grads einer Übereinstimmung der geschätzten Ausgabe mit einem Satz der Ausgangsvariablendaten in dem Eingabe-Ausgabe-Datensatz; und
Aktualisieren eines Lernparameters des Modells gemäß einem Ergebnis der Evaluierung zum Erlernen der Zustandsgleichung.

3. Steuerverfahren für ein System (300), mit:

einem Prozess zum Erlernen eines Modells, das eine Beziehung zwischen einer Eingangsvariablen v, die in ein System (300) eingegeben wird, und einer Ausgangsvariablen y, die von dem System (300) ausgegeben wird, zeigt,
einem Prozess zum Bestimmen eines Zielwerts der Eingangsvariablen v in Entsprechung zu einem Zielwert der Ausgangsvariablen y unter Verwendung des Modells, das in dem Prozess zum Erlernen eines Modells erlernt wird, und
einem Prozess zum Steuern des Systems (300) unter Verwendung des bestimmten Zielwerts der Eingangsvariablen v,
einem Prozess zum Erlernen eines Modells, mit:

einem Prozess zum Erhalten eines Modells, das zum Erlernen einer nichtlinearen Zustandsgleichung zum Vorhersagen der Ausgangsvariablen y unter Verwendung der Eingangsvariablen v verwendet wird; und
einem Prozess zum Erlernen der Zustandsgleichung unter Verwendung des Modells und eines Eingabe-Ausgabe-Datensatzes mit mehreren Sätzen von Eingangsvariablendaten und Ausgangsvariablendaten in Bezug auf das Modell, wobei
das Modell eine Zustandsgleichung mit einer bijektiven Abbildung $\psi$, die die Eingangsvariable v als eine Eingabe derselben verwendet, und einer bijektiven Abbildung $\varphi$, die die Ausgangsvariable y als eine Eingabe verwendet, ist,
das Modell durch einen Ausdruck (1) definiert ist:
[Math. 1]

$$\dot{y} = \left(\frac{\partial \Phi}{\partial y}\right)^{-1}\left\{A'(d)\Phi(y,d) + B'(d)\Psi(v,d) + c'(d) - \frac{\partial \Phi}{\partial d}\dot{d}\right\} \qquad\qquad (1)$$

wobei eine linke Seite eines Gleichheitszeichens eine zeitliche Ableitung eines n-dimensionalen Vektors ist, der die Ausgangsvariable y angibt, wobei n eine ganze Zahl ist; und
auf der rechten Seite des Gleichheitszeichens
die Eingangsvariable v ein m-dimensionaler Vektor ist, wobei m eine ganze Zahl ist, eine exogene Eingabe d ein p-dimensionaler Vektor ist, der eine nicht steuerbare Eingabe angibt, die sich auf eine Variation der Ausgangsvariablen y auswirkt, wobei p eine ganze Zahl ist,
die Abbildung $\psi$ eine Funktion ist, die einen m-dimensionalen Vektor unter Verwendung der Eingangsvariablen v und der exogenen Variablen d als Eingaben derselben ergibt,

die Abbildung φ eine Funktion ist, die einen n-dimensionalen Vektor unter Verwendung der Ausgangsvariablen y und der exogenen Variablen d als Eingaben derselben ergibt und

eine Funktion A', eine Funktion B' und eine Funktion c' jeweils Funktionen sind, die eine n×n-Matrix, eine n×m-Matrix und einen n-dimensionalen Vektor unter Verwendung der exogenen Eingabe d als eine Eingabe ergeben,

in dem Ausdruck (1), wenn die Abbildung ψ als eine interne Variable u definiert wird und die Abbildung φ als eine interne Variable x definiert wird, ein Lernabschnitt (112, 212) die Zustandsgleichung erlernt, die durch einen Ausdruck (2) bis einen Ausdruck (4) definiert ist:

[Math. 2]

$$u = \Psi(v, d) \qquad (2);$$

[Math. 3]

$$y = \Phi^{-1}(x, d) \qquad (3);$$

und
[Math. 4]

$$\dot{x} = A'(d)x + B'(d)u + c'(d) \qquad (4),$$

die Abbildung ψ durch einen Ausdruck (5) bis einen Ausdruck (8) definiert ist:
[Math. 5]

$$\Psi(v, d) = v_\Psi^{(L_\Psi)} \qquad (5);$$

[Math. 6]

$$v_\Psi^{(i)} = \psi_\Psi^{(i)}\left(u_\Psi^{(i)}, d\right) \qquad (6);$$

[Math. 7]

$$u_\Psi^{(i)} = W_\Psi^{(i)}(d)v_\Psi^{(i-1)} + b_\Psi^{(i)}(d) \qquad (7);$$

und
[Math. 8]

$$v_\Psi^{(0)} = v \qquad (8),$$

die Abbildung φ durch einen Ausdruck (9) bis einen Ausdruck (12) definiert ist:
[Math. 9]

$$\Phi(y, d) = y_\Phi^{(L_\Phi)} \qquad (9);$$

[Math. 10]

$$y_\Phi^{(i)} = \varphi_\Phi^{(i)}\left(x_\Phi^{(i)}, d\right) \qquad (10);$$

[Math. 11]

$$x_\Phi^{(i)} = W_\Phi^{(i)}(d)y_\Phi^{(i-1)} + b_\Phi^{(i)}(d) \tag{11};$$

und
[Math. 12]

$$y_\Phi^{(0)} = y \tag{12},$$

wobei i eine Schichtzahl in einem neuronalen Netz mit mehreren Schichten angibt; $L_\psi$ und $L_\varphi$ jeweils eine Anzahl von Schichten in dem neuronalen Netz mit mehreren Schichten angeben; $W_\psi$ und $W_\varphi$ jeweils ein Gewicht angeben, wobei $b_\psi$ und $b_\varphi$ jeweils einen Bias angeben; und $\psi_\psi$ und $\varphi_\varphi$ jeweils eine Aktivierungsfunktion sind und eine beliebige bijektive Abbildung angeben, die eine Ausgabe mit einer identischen Dimension zu einer Dimension einer Eingabe ergibt,

in dem Prozess des Erlernens der Zustandsgleichung der Lernabschnitt (112, 212) eine Zustandsgleichung erlernt, die durch einen Ausdruck (13) bis einen Ausdruck (15) ausgedrückt wird, die durch Diskretisieren der Gleichung (2) bis zu der Gleichung (4) durch einen Zeitschritt bei einer diskreten Zeit k erhalten werden:
[Math. 13]

$$u_k = \Psi(v_k, d_k) \tag{13};$$

[Math. 14]

$$y_k = \phi^{-1}(x_k, d_k) \tag{14};$$

und
[Math. 15]

$$x_{k+1} = A(d_k)x_k + B(d_k)u_k + c(d_k) \tag{15},$$

in dem Prozess des Bestimmens ein Bestimmungsabschnitt (213) ein Optimale-Steuerung-Problem unter Verwendung der Zustandsgleichung löst, die durch den Ausdruck (13) bis zu dem Ausdruck (15) ausgedrückt wird und durch den Lernabschnitt (112, 212) erlernt wird.

4. Computerprogramm, das bewirkt, dass eine Informationsverarbeitungsvorrichtung ein System (300) steuert, bei dem das Computerprogramm bewirkt, dass die Informationsverarbeitungsvorrichtung Folgendes durchführt:

eine Funktion zum Erlernen eines Modells, das eine Beziehung zwischen einer Eingangsvariablen v, die in ein System (300) eingegeben wird, und einer Ausgangsvariablen y, die von dem System (300) ausgegeben wird, zeigt,

eine Funktion zum Bestimmen eines Zielwerts der Eingangsvariablen v in Entsprechung zu einem Zielwert der Ausgangsvariablen y unter Verwendung des Modells, das in dem Prozess zum Erlernen eines Modells erlernt wird, und

eine Funktion zum Steuern des Systems (300) unter Verwendung des bestimmten Zielwerts der Eingangsvariablen v,

eine Funktion zum Erlernen eines Modells, mit:

einer Funktion zum Erhalten eines Modells, das zum Erlernen einer nichtlinearen Zustandsgleichung zum Vorhersagen der Ausgangsvariablen y unter Verwendung der Eingangsvariablen v verwendet wird; und

einer Funktion zum Erlernen der Zustandsgleichung unter Verwendung des Modells und eines Eingabe-Ausgabe-Datensatzes mit mehreren Sätzen von Eingangsvariablendaten und Ausgangsvariablendaten in Bezug auf das Modell, wobei

das Modell eine Zustandsgleichung mit einer bijektiven Abbildung $\psi$, die die Eingangsvariable v als eine Eingabe derselben verwendet, und einer bijektiven Abbildung $\varphi$, die die Ausgangsvariable y als eine Eingabe verwendet, ist,

das Modell durch einen Ausdruck (1) definiert ist:
[Math. 1]

$$\dot{y} = \left(\frac{\partial \Phi}{\partial y}\right)^{-1} \left\{ A'(d)\Phi(y,d) + B'(d)\Psi(v,d) + c'(d) - \frac{\partial \Phi}{\partial d}\dot{d} \right\} \qquad (1)$$

wobei eine linke Seite eines Gleichheitszeichens eine zeitliche Ableitung eines n-dimensionalen Vektors ist, der die Ausgangsvariable y angibt, wobei n eine ganze Zahl ist; und

auf der rechten Seite des Gleichheitszeichens

die Eingangsvariable v ein m-dimensionaler Vektor ist, wobei m eine ganze Zahl ist, eine exogene Eingabe d ein p-dimensionaler Vektor ist, der eine nicht steuerbare Eingabe angibt, die sich auf eine Variation der Ausgangsvariablen y auswirkt, wobei p eine ganze Zahl ist,

die Abbildung ψ eine Funktion ist, die einen m-dimensionalen Vektor unter Verwendung der Eingangsvariablen v und der exogenen Variablen d als Eingaben derselben ergibt,

die Abbildung φ eine Funktion ist, die einen n-dimensionalen Vektor unter Verwendung der Ausgangsvariablen y und der exogenen Variablen d als Eingaben derselben ergibt und

eine Funktion A', eine Funktion B' und eine Funktion c' jeweils Funktionen sind, die eine n×n-Matrix, eine n×m-Matrix und einen n-dimensionalen Vektor unter Verwendung der exogenen Eingabe d als eine Eingabe ergeben,

in dem Ausdruck (1), wenn die Abbildung ψ als eine interne Variable u definiert wird und die Abbildung φ als eine interne Variable x definiert wird, die Funktion zum Erlernen der Zustandsgleichung die Zustandsgleichung erlernt, die durch einen Ausdruck (2) bis einen Ausdruck (4) definiert ist:

[Math. 2]

$$u = \Psi(v,d) \qquad (2);$$

[Math. 3]

$$y = \Phi^{-1}(x,d) \qquad (3);$$

und
[Math. 4]

$$\dot{x} = A'(d)x + B'(d)u + c'(d) \qquad (4),$$

die Abbildung ψ durch einen Ausdruck (5) bis einen Ausdruck (8) definiert ist:
[Math. 5]

$$\Psi(v,d) = v_\Psi^{(L_\Psi)} \qquad (5);$$

[Math. 6]

$$v_\Psi^{(i)} = \psi_\Psi^{(i)}\left(u_\Psi^{(i)}, d\right) \qquad (6);$$

[Math. 7]

$$u_\Psi^{(i)} = W_\Psi^{(i)}(d)v_\Psi^{(i-1)} + b_\Psi^{(i)}(d) \qquad (7);$$

und
[Math. 8]

$$v_\Psi^{(0)} = v \qquad (8),$$

die Abbildung φ durch einen Ausdruck (9) bis einen Ausdruck (12) definiert ist:
[Math. 9]

$$\Phi(y, d) = y_\Phi^{(L_\Phi)} \tag{9};$$

[Math. 10]

$$y_\Phi^{(i)} = \varphi_\Phi^{(i)}\left(x_\Phi^{(i)}, d\right) \tag{10};$$

[Math. 11]

$$x_\Phi^{(i)} = W_\Phi^{(i)}(d) y_\Phi^{(i-1)} + b_\Phi^{(i)}(d) \tag{11};$$

und
[Math. 12]

$$y_\Phi^{(0)} = y \tag{12},$$

wobei i eine Schichtzahl in einem neuronalen Netz mit mehreren Schichten angibt; $L_\Psi$ und $L_\varphi$ jeweils eine Anzahl von Schichten in dem neuronalen Netzwerk mit mehreren Schichten angeben; $W_\Psi$ und $W_\varphi$ jeweils ein Gewicht angeben, wobei $b_\Psi$ und $b_\varphi$ jeweils einen Bias angeben; und $\psi_\Psi$ und $\varphi_\varphi$ jeweils eine Aktivierungsfunktion sind und eine beliebige bijektive Abbildung angeben, die eine Ausgabe mit einer identischen Dimension zu einer Dimension einer Eingabe ergibt,

die Funktion zum Erlernen der Zustandsgleichung eine Zustandsgleichung erlernt, die durch einen Ausdruck (13) bis einen Ausdruck (15) ausgedrückt wird, die durch Diskretisieren der Gleichung (2) bis zu der Gleichung (4) durch einen Zeitschritt bei einer diskreten Zeit k erhalten werden:

[Math. 13]

$$u_k = \Psi(v_k, d_k) \tag{13};$$

[Math. 14]

$$y_k = \phi^{-1}(x_k, d_k) \tag{14};$$

und
[Math. 15]

$$x_{k+1} = A(d_k)x_k + B(d_k)u_k + c(d_k) \tag{15},$$

die Funktion zum Bestimmen ein Optimale-Steuerung-Problem unter Verwendung der Zustandsgleichung löst, die durch den Ausdruck (13) bis zu dem Ausdruck (15) ausgedrückt wird und durch die Funktion zum Erlernen der Zustandsgleichung erlernt wird.

## Revendications

1. Appareil de commande (200) configuré pour commander un système (300), comprenant :

   un appareil d'apprentissage de modèle (100) configuré pour apprendre un modèle qui montre une relation entre une variable d'entrée v introduite dans un système (300) et une variable de sortie y émise par le système (300), et une partie de détermination (213) configurée pour déterminer une valeur cible de la variable d'entrée v correspondant à une valeur cible de la variable de sortie y en utilisant le modèle appris par l'appareil d'apprentissage de modèle (100),
   l'appareil d'apprentissage de modèle (100) comprenant :

une partie de stockage de modèle (121) configurée pour stocker un modèle utilisé pour apprendre une équation d'état non linéaire pour prédire la variable de sortie y en utilisant la variable d'entrée v, et

une partie d'apprentissage (112, 212) configurée pour apprendre l'équation d'état en utilisant le modèle et un ensemble de données d'entrée-sortie comprenant de multiples ensembles de données de variables d'entrée et de données de variables de sortie par rapport au modèle, dans lequel,

le modèle est une équation d'état comprenant un mappage bijectif $\Psi$ qui utilise la variable d'entrée v comme entrée et un mappage bijectif $\varphi$ qui utilise la variable de sortie y comme entrée,

le modèle est défini par une expression (1) :

[Math. 1]

$$\dot{y} = \left(\frac{\partial \Phi}{\partial y}\right)^{-1} \left\{ A'(d)\Phi(y,d) + B'(d)\Psi(v,d) + c'(d) - \frac{\partial \Phi}{\partial d}\dot{d} \right\} \tag{1}$$

où le côté gauche d'un signe égal est une dérivée temporelle d'un vecteur à n dimensions qui indique la variable de sortie y, où n représente un nombre entier ; et

dans le côté droit du signe égal,

la variable d'entrée v est un vecteur à m dimensions, où m représente un nombre entier, une entrée exogène d est un vecteur à p dimensions qui indique une entrée incontrôlable affectant une variation de la variable de sortie y, où p représente un nombre entier,

le mappage $\Psi$ est une fonction qui donne un vecteur à m dimensions en utilisant la variable d'entrée v et la variable exogène d comme entrées de celui-ci,

le mappage $\varphi$ est une fonction qui donne un vecteur à n dimensions en utilisant la variable de sortie y et la variable exogène d comme entrées de celui-ci, et

une fonction A', une fonction B' et une fonction c' sont respectivement des fonctions qui donnent une matrice n x n, une matrice n x m et un vecteur à n dimensions en utilisant l'entrée exogène d comme une entrée,

dans l'expression (1), lorsque le mappage $\Psi$ est défini comme une variable interne u et que le mappage $\varphi$ est défini comme une variable interne x, la partie d'apprentissage (112, 212) apprend l'équation d'état définie par une expression (2) à une expression (4) :

[Math. 2]

$$u = \Psi(v,d) \tag{2};$$

[Math. 3]

$$y = \Phi^{-1}(x,d) \tag{3};$$

et

[Math. 4]

$$\dot{x} = A'(d)x + B'(d)u + c'(d) \tag{4},$$

Le mappage $\Psi$ est défini par une expression (5) à une expression (8) :

[Math. 5]

$$\Psi(v,d) = v_\Psi^{(L_\Psi)} \tag{5};$$

[Math. 6]

$$v_\Psi^{(i)} = \psi_\Psi^{(i)}\left(u_\Psi^{(i)}, d\right) \tag{6};$$

[Math. 7]

$$u_\Psi^{(i)} = W_\Psi^{(i)}(d)v_\Psi^{(l-1)} + b_\Psi^{(i)}(d) \tag{7};$$

et
[Math. 8]

$$v_\Psi^{(0)} = v \tag{8},$$

Le mappage $\varphi$ est défini par une expression (9) à une expression (12) :
[Math. 9]

$$\Phi(y, d) = y_\Phi^{(L_\Phi)} \tag{9};$$

[Math. 10]

$$y_\Phi^{(i)} = \varphi_\Phi^{(i)}\left(x_\Phi^{(i)}, d\right) \tag{10};$$

[Math. 11]

$$x_\Phi^{(i)} = W_\Phi^{(i)}(d)y_\Phi^{(l-1)} + b_\Phi^{(i)}(d) \tag{11};$$

et
[Math. 12]

$$y_\Phi^{(0)} = y \tag{12},$$

où i représente un numéro de couche dans un réseau neuronal multicouche ; chacun de $L_\Psi$ et $L_\varphi$ représente le nombre de couches dans le réseau neuronal multicouche ; chacun de $W_\Psi$ et $W_\varphi$ représente un poids, chacun de $b_\Psi$ et $b_\varphi$ représente un biais ; et chacun de $\Psi_\Psi$ et $\varphi_\varphi$, est une fonction d'activation et un mappage bijectif arbitraire qui donne une sortie d'une dimension identique à une dimension d'une entrée, la partie d'apprentissage (112, 212) apprend une équation d'état exprimée par une expression (13) à une expression (15) obtenue en discrétisant l'équation (2) à l'équation (4) par un pas de temps à un temps discret k :
[Math. 13]

$$u_k = \Psi(v_k, d_k) \tag{13};$$

[Math. 14]

$$y_k = \phi^{-1}(x_k, d_k) \tag{14};$$

et
[Math. 15]

$$x_{k+1} = A(d_k)x_k + B(d_k)u_k + c(d_k) \tag{15},$$

la partie de détermination (213) résout un problème de contrôle optimal en utilisant l'équation d'état exprimée par l'expression (13) à l'expression (15) apprise par la partie d'apprentissage (112, 212).

2. Appareil de commande (200) selon la revendication 1,

dans lequel la partie d'apprentissage (112, 212) est configurée pour:

donner un ensemble de données de variables d'entrée dans l'ensemble de données d'entrée-sortie au modèle et estimer une sortie ;

évaluer un degré de correspondance de la sortie estimée avec un ensemble de données de variables de sortie dans l'ensemble de données d'entrée-sortie ; et

mettre à jour un paramètre d'apprentissage du modèle en fonction du résultat de l'évaluation, de manière à apprendre l'équation d'état.

3. Procédé de contrôle d'un système (300), comprenant :

un processus d'apprentissage d'un modèle qui montre une relation entre une variable d'entrée v introduite dans un système (300) et une variable de sortie y émise par le système (300),

un processus de détermination de la valeur cible de la variable d'entrée v correspondant à une valeur cible de la variable de sortie y en utilisant le modèle appris dans le processus d'apprentissage d'un modèle, et

un processus de contrôle du système (300) en utilisant la valeur cible déterminée de la variable d'entrée v,

un processus d'apprentissage d'un modèle comprenant :

un processus d'obtention d'un modèle utilisé pour apprendre une équation d'état non linéaire pour prédire la variable de sortie y en utilisant la variable d'entrée v ; et

un processus d'apprentissage de l'équation d'état en utilisant le modèle et un ensemble de données d'entrée-sortie comprenant des ensembles multiples de données de variables d'entrée et de données de variables de sortie par rapport au modèle, dans lequel

le modèle est une équation d'état comprenant un mappage bijectif Ψ qui utilise la variable d'entrée v comme une entrée et un mappage bijectif φ qui utilise la variable de sortie y comme entrée,

le modèle est défini par l'expression (1) :

[Math. 1]

$$\dot{y} = \left(\frac{\partial \Phi}{\partial y}\right)^{-1} \left\{ A'(d)\Phi(y,d) + B'(d)\Psi(v,d) + c'(d) - \frac{\partial \Phi}{\partial d}d \right\} \tag{1}$$

où un côté gauche d'un signe égal est une dérivée temporelle d'un vecteur à n dimensions qui indique la variable de sortie y, où n représente un nombre entier ; et

dans un côté droit du signe égal,

la variable d'entrée v est un vecteur à m dimensions, où m représente un nombre entier,

une entrée exogène d est un vecteur à p dimensions qui indique une entrée incontrôlable affectant une variation de la variable de sortie y, où p représente un nombre entier,

le mappage Ψ est une fonction qui donne un vecteur à m dimensions en utilisant la variable d'entrée v et la variable exogène d comme entrées de celui-ci,

le mappage φ est une fonction qui donne un vecteur à n dimensions en utilisant la variable de sortie y et la variable exogène d comme entrées de celui-ci, et

une fonction A', une fonction B' et une fonction c' sont respectivement des fonctions qui donnent une matrice n x n, une matrice n x m et un vecteur à n dimensions en utilisant l'entrée exogène d comme une entrée,

dans l'expression (1), lorsque le mappage Ψ est défini comme une variable interne u et que le mappage φ est défini comme une variable interne x, une partie d'apprentissage (112, 212) apprend l'équation d'état définie par une expression (2) à une expression (4) :

[Math, 2]

$$u = \Psi(v,d) \tag{2};$$

[Math. 3]

$$y = \Phi^{-1}(x,d) \tag{3};$$

et

[Math. 4]

$$\dot{x} = A'(\mathrm{d})x + B'(\mathrm{d})u + c'(\mathrm{d}) \tag{4},$$

le mappage $\Psi$ est défini par une expression (5) à une expression (8) :
[Math. 5]

$$\Psi(\mathrm{v}, \mathrm{d}) = \mathrm{v}_\Psi^{(L_\Psi)} \tag{5};$$

[Math. 6]

$$\mathrm{v}_\Psi^{(i)} = \psi_\Psi^{(i)}\left(\mathrm{u}_\Psi^{(i)}, d\right) \tag{6};$$

[Math. 7]

$$\mathrm{u}_\Psi^{(i)} = \mathrm{W}_\Psi^{(i)}(d)\mathrm{v}_\Psi^{(i-1)} + \mathrm{b}_\Psi^{(i)}(d) \tag{7};$$

et
[Math. 8]

$$\mathrm{v}_\Psi^{(0)} = v \tag{8},$$

le mappage $\varphi$ est défini par une expression (9) à une expression (12) :
[Math. 9]

$$\Phi(\mathrm{y}, \mathrm{d}) = \mathrm{y}_\Phi^{(L_\Phi)} \tag{9};$$

[Math. 10]

$$\mathrm{y}_\Phi^{(i)} = \varphi_\Phi^{(i)}\left(\mathrm{x}_\Phi^{(i)}, d\right) \tag{10};$$

[Math. 11]

$$\mathrm{x}_\Phi^{(i)} = \mathrm{W}_\Phi^{(i)}(d)\mathrm{y}_\Phi^{(i-1)} + \mathrm{b}_\Phi^{(i)}(d) \tag{11};$$

et
[Math. 12]

$$\mathrm{y}_\Phi^{(0)} = y \tag{12},$$

où i représente un numéro de couche dans un réseau neuronal multicouche ; chacun de $L_\Psi$ et $L_\varphi$ représente le nombre de couches dans le réseau neuronal multicouche ; chacun de $W_\Psi$ et $W_\varphi$ représente un poids, chacun de $b_\Psi$ et $b_\varphi$ représente un biais ; et chacun de $\Psi_\Psi$ et $\varphi_\varphi$ est une fonction d'activation et représente un mappage bijectif arbitraire qui donne une sortie d'une dimension identique à une dimension d'une entrée, dans le processus d'apprentissage de l'équation d'état, la partie d'apprentissage (112, 212) apprend une équation d'état exprimée par une expression (13) à une expression (15) obtenue en discrétisant l'équation (2) à l'équation (4) par un pas de temps à un temps discret k :
[Math. 13]

$$u_k = \Psi(v_k, d_k) \tag{13};$$

[Math. 14]

$$y_k = \phi^{-1}(x_k, d_k) \tag{14};$$

et
[Math. 15]

$$x_{k+1} = A(d_k)x_k + B(d_k)u_k + c(d_k) \tag{15},$$

dans le processus de détermination, une partie de détermination (213) résout un problème de contrôle optimal en utilisant l'équation d'état exprimée par l'expression (13) à l'expression (15) apprise par la partie d'apprentissage (112, 212).

4. Programme informatique permettant à un appareil de traitement d'information de contrôler un système (300)

le programme d'ordinateur amenant l'appareil de traitement d'information à effectuer: une fonction d'apprentissage d'un modèle qui montre une relation entre une variable d'entrée v introduite dans un système (300) et une variable de sortie y émise par le système (300),
une fonction de détermination de la valeur cible de la variable d'entrée v correspondant à une valeur cible de la variable de sortie y en utilisant le modèle appris dans le processus d'apprentissage d'un modèle, et
une fonction de contrôle du système (300) en utilisant la valeur cible déterminée de la variable d'entrée v,
une fonction d'apprentissage d'un modèle comprenant :

une fonction d'obtention d'un modèle utilisé pour apprendre une équation d'état non linéaire pour prédire la variable de sortie y en utilisant la variable d'entrée v ; et
une fonction d'apprentissage de l'équation d'état en utilisant le modèle et un ensemble de données d'entrée-sortie comprenant multiples ensembles de données de variables d'entrée et de données de variables de sortie par rapport au modèle, dans lequel
le modèle est une équation d'état comprenant un mappage bijectif $\Psi$ qui utilise la variable d'entrée v comme une entrée de celui-ci et un mappage bijectif $\phi$ qui utilise la variable de sortie y comme une entrée de celui-ci,
le modèle est défini par l'expression (1) :
[Math. 1]

$$\dot{y} = \left(\frac{\partial \Phi}{\partial y}\right)^{-1}\left\{A'(d)\Phi(y,d) + B'(d)\Psi(v,d) + c'(d) - \frac{\partial \Phi}{\partial d}d\right\} \tag{1}$$

où un côté gauche d'un signe égal est une dérivée temporelle d'un vecteur à n dimensions qui indique la variable de sortie y, où n représente un nombre entier ; et
dans un côté droit du signe égal,
la variable d'entrée v est un vecteur à m dimensions, où m représente un nombre entier,
une entrée exogène d est un vecteur à p dimensions qui indique une entrée incontrôlable affectant une variation de la variable de sortie y, où p représente un nombre entier,
le mappage $\Psi$ est une fonction qui donne un vecteur à m dimensions en utilisant la variable d'entrée v et la variable exogène d comme des entrées de celui-ci
le mappage $\phi$ est une fonction qui donne un vecteur à n dimensions en utilisant la variable de sortie y et la variable exogène d comme des entrées de celui-ci, et
une fonction A', une fonction B' et une fonction c' sont respectivement des fonctions qui donnent une matrice n x n, une matrice n x m et un vecteur à n dimensions en utilisant l'entrée exogène d comme entrée,
dans l'expression (1), lorsque le mappage $\Psi$ est défini comme une variable interne u et que mappage $\phi$ est défini comme une variable interne x, la fonction d'apprentissage de l'équation d'état apprend l'équation d'état définie par une expression (2) à une expression (4) :
[Math. 2]

$$u = \Psi(v, d) \tag{2};$$

[Math. 3]

$$y = \Phi^{-1}(x, d) \tag{3};$$

et
[Math. 4]

$$\dot{x} = A'(d)x + B'(d)u + c'(d) \tag{4},$$

le mappage $\Psi$ est défini par une expression (5) à une expression (8) :
[Math. 5]

$$\Psi(v, d) = v_{\Psi}^{(L_{\Psi})} \tag{5};$$

[Math. 6]

$$v_{\Psi}^{(i)} = \psi_{\Psi}^{(i)}\left(u_{\Psi}^{(i)}, d\right) \tag{6};$$

[Math. 7]

$$u_{\Psi}^{(i)} = W_{\Psi}^{(i)}(d)v_{\Psi}^{(i-1)} + b_{\Psi}^{(i)}(d) \tag{7};$$

et
[Math. 8]

$$v_{\Psi}^{(0)} = v \tag{8},$$

le mappage $\varphi$ est défini par une expression (9) à une expression (12) :
[Math. 9]

$$\Phi(y, d) = y_{\Phi}^{(L_{\Phi})} \tag{9};$$

[Math. 10]

$$y_{\Phi}^{(i)} = \varphi_{\Phi}^{(i)}\left(x_{\Phi}^{(i)}, d\right) \tag{10};$$

[Math. 11]

$$x_{\Phi}^{(i)} = W_{\Phi}^{(i)}(d)y_{\Phi}^{(i-1)} + b_{\Phi}^{(i)}(d) \tag{11};$$

et
[Math. 12]

$$y_{\Phi}^{(0)} = y \tag{12},$$

où i représente un numéro de couche dans un réseau neuronal multicouche ; chacun de $L_\Psi$ et $L_\varphi$ représente le nombre de couches dans le réseau neuronal multicouche ; chacun de $W_\Psi$ et $W_\varphi$ représente un poids, chacun de $b_\Psi$ et $b_\varphi$ représente un biais ; et chacun de $\Psi_\Psi$ et $\varphi_\varphi$, est une fonction d'activation et représente un mappage bijectif arbitraire qui donne une sortie d'une dimension identique à une dimension d'une entrée, la fonction d'apprentissage de l'équation d'état apprend une équation d'état exprimée par une expression (13) à une expression (15) obtenue en discrétisant l'équation (2) à l'équation (4) par un pas de temps à un temps discret k

[Math. 13]

$$u_k = \Psi(v_k, d_k) \tag{13};$$

[Math. 14]

$$y_k = \phi^{-1}(x_k, d_k) \tag{14};$$

et
[Math. 15]

$$x_{k+1} = A(d_k)x_k + B(d_k)u_k + c(d_k) \tag{15},$$

la fonction de détermination résout un problème de contrôle optimal en utilisant l'équation d'état exprimée par l'expression (13) à l'expression (15) apprise par la fonction d'apprentissage de l'équation d'état.

# FIG.1

100

110

120

**CPU**

**STORAGE MODULE**

CONTROLLER ~111

LEARNING MODULE ~112

MODEL STORAGE PORTION ~121

DATA SET STORAGE PORTION ~122

ROM/RAM ~130

COMMUNICATION MODULE ~140

INPUT-OUTPUT MODULE ~150

# FIG.2

```
        ┌─────────┐
        │  START  │
        └────┬────┘
             ▼                    ┌S11
┌──────────────────────────────┐
│  OBTAIN MODEL AND INITIALIZE  │
└──────────────┬───────────────┘
               ▼                  ┌S12
┌──────────────────────────────┐
│  OBTAIN INPUT-OUTPUT DATA SET  │
└──────────────┬───────────────┘
               ▼                  ┌S13
    ┌──────────────────────┐
    │    GIVE INPUT DATA    │
    │     SET TO MODEL      │
    │  AND ESTIMATE OUTPUT  │
    └──────────┬───────────┘
               ▼                  ┌S14
    ┌──────────────────────┐
    │ EVALUATE MATCHING DEGREE │
    │    OF ESTIMATED OUTPUT   │
    │   WITH OUTPUT DATA SET   │
    └──────────┬───────────┘
               ▼                  ┌S15
    ◁─────────────────────────────▷  YES
      MATCHING DEGREE IS SUFFICIENT?
               │ NO
               ▼                  ┌S16
    ┌──────────────────────┐
    │ UPDATE LEARNING PARAMETERS │
    └──────────────────────┘

                              ┌─────────┐
                              │   END   │
                              └─────────┘
```

# FIG.3

~200

**CPU** ~210

**STORAGE MODULE** ~120

CONTROLLER ~111

LEARNING MODULE ~212

DETERMINATION MODULE ~213

MODEL STORAGE PORTION ~121

DATA SET STORAGE PORTION ~122

ROM/RAM ~130

COMMUNICATION MODULE ~140

INPUT-OUTPUT MODULE ~150

SYSTEM ~300

# FIG.4

```
        ┌─────────────┐
        │    START    │
        └──────┬──────┘
               │         ┌S21
        ┌──────▼──────────────────┐
        │    OBTAIN MODEL,         │
        │  OBJECTIVE FUNCTION      │
        │ AND CONSTRAINT FUNCTION  │
        └──────┬──────────────────┘
               │         ┌S22
        ┌──────▼──────────────────┐
        │  DETERMINE PARAMETERS    │
        │ OF OPTIMAL CONTROL PROBLEM│
        │     AT PRESENT TIME      │
        └──────┬──────────────────┘
               │         ┌S23
        ┌──────▼──────────────────┐
        │ READ INITIAL INPUT TIME SERIES│
        │     FOR OPTIMIZATION     │
        └──────┬──────────────────┘
               │         ┌S24
        ┌──────▼──────────────────┐
        │        SOLVE             │
        │ OPTIMAL CONTROL PROBLEM  │
        └──────┬──────────────────┘
               │         ┌S25
        ┌──────▼──────────────────┐
        │ REFLECT OBTAINED SOLUTION│
        │       AS INPUT           │
        └──────┬──────────────────┘
               │         ┌S26
        ┌──────▼──────────────────┐  YES
        │ CONTROL IS TO BE TERMINATED? ├──┐
        └──────┬──────────────────┘   │
              NO                       │
               │         ┌S27         │
        ┌──────▼──────────────────┐   │
        │     ADVANCE TIME         │   │
        └─────────────────────────┘   │
                                  ┌────▼────┐
                                  │   END   │
                                  └─────────┘
```

# FIG.5

(a)

(b)

# FIG.6

(a)

(b)

(c)

(d)

# FIG.7

**EP 3 985 461 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020173380 A
- JP 2018179888 A
- JP 2020051305 A